# EUROPEAN PATENT APPLICATION

(11) **EP 4 596 276 A1**
(43) Date of publication of application: **06.08.2025**
(21) Application number: 23871082.6
(22) Date of filing: 28.09.2023
(51) Int. Cl.: B60H 1/00, H01M 10/00

(54) **THERMAL MANAGEMENT SYSTEM AND VEHICLE HAVING SAME**

(30) Priority: 29.09.2022 CN 202211204910
(71) Applicant: BYD Company Limited, Shenzhen, Guangdong 518118 (CN)
(72) Inventor: LIAN, Yubo, Shenzhen, Guangdong 518118 (CN); HUANG, Wei, Shenzhen, Guangdong 518118 (CN); LI, Junfang, Shenzhen, Guangdong 518118 (CN); YAN, Lianbao, Shenzhen, Guangdong 518118 (CN); XING, Xiulan, Shenzhen, Guangdong 518118 (CN)
(74) Representative: Mathys & Squire
(86) International application number: PCT/CN2023/122878
(87) International publication number: WO 2024/067858

(57) **Abstract**

A thermal management system and a vehicle having same. The thermal management system comprises a battery heat exchange module and a controller. The battery heat exchange module comprises a first trunk line and a second trunk line, wherein a first heat exchange assembly is arranged in the first trunk line, a second heat exchange assembly is arranged in the second trunk line, and the first heat exchange assembly and the second heat exchange assembly are used for exchanging heat with a battery. The controller is configured to control at least one of the first trunk line and the second trunk line to exchange heat with the battery according to the temperature of the battery.

## Description

### CROSS-REFERENCE TO RELATED APPLICATIONS

The present disclosure claims priority to Chinese Patent Application No. 2022112049102 filed on September 29, 2022, which is incorporated herein by reference in its entirety.

### FIELD

The present disclosure relates to the field of vehicle technologies, and in particular, to a heat management system and a vehicle having the same.

### BACKGROUND

In an architecture of an existing heat pump system for heat management of an entire vehicle, only one heat exchange branch is arranged on a side of a battery, to perform unified heat exchange on a corresponding area of the battery. Consequently, an area of the battery cannot meet a temperature requirement for normal work.

### SUMMARY

The present disclosure aims to resolve at least one of technical problems existing in the related art. To this end, one purpose of the present disclosure is to provide a heat management system, to cause a battery heat exchange module to exchange heat with a battery at an appropriate efficiency, thereby reducing energy consumption of the heat management system and improving working efficiency of the heat management system.

The other purpose of the present disclosure is to provide a vehicle.

A heat management system according to an embodiment of the present disclosure includes: a battery heat exchange module and a controller. The battery heat exchange module includes: a first trunk line and a second trunk line. A first heat exchange assembly is arranged in the first trunk line, a second heat exchange assembly is arranged in the second trunk line, and the heat exchange assemblies are configured to exchange heat with a battery. The controller is configured to control, according to a temperature of the battery, at least one of the first trunk line and the second trunk line to exchange heat with the battery.

For the heat management system according to this embodiment of the present disclosure, the first heat exchange assembly and the second heat exchange assembly are arranged, and the controller is arranged to control at least one of the first heat exchange assembly and the second heat exchange assembly to exchange heat with the battery. The battery heat exchange module exchanges heat with the battery with different efficiency. The controller enables, according to the temperature of the battery, the battery heat exchange module to exchange heat with the battery with appropriate efficiency, thereby reducing energy consumption of the heat management system and improving the functionality of the heat management system.

In some embodiments, the heat management system further includes: an air conditioning circulation loop. The air conditioning circulation loop includes a heating branch. The first trunk line is connected to the heating branch in parallel. The second trunk line is connected to the heating branch in parallel. The controller is configured to control at least one of the heating branch, the first trunk line, and the second trunk line to exchange heat.

In some embodiments, the heat management system further includes: an air conditioning circulation loop. The air conditioning circulation loop includes a cooling branch and a heating branch. The first trunk line is connected to the cooling branch in parallel. The second trunk line is connected to the cooling branch in parallel. The first trunk line is connected to the heating branch in parallel. The second trunk line is connected to the heating branch in parallel. The controller is configured to control at least one of the heating branch, the cooling branch, the first trunk line, and the second trunk line to exchange heat.

In some embodiments, the heat management system further includes a storage device. The storage device is connected between an air outlet of a compressor and an air inlet of the compressor in the heat management system.

Specifically, the controller controls, according to the temperature of the battery, the storage device to supply a working medium to the first trunk line or/and the second trunk line. Alternatively, the controller controls, according to the temperature of the battery, the storage device to supply a working medium to the air conditioning circulation loop.

In some embodiments, the air conditioning circulation loop includes: a compressor, a first heat exchanger, and a second heat exchanger. The compressor includes an air inlet and an air outlet, and the air outlet of the compressor, the first heat exchanger, the second heat exchanger, and the air inlet of the compressor are connected in sequence. The heating branch includes the first heat exchanger, the first trunk line is connected to the first heat exchanger in parallel, the second trunk line is connected to the first heat exchanger in parallel, and the controller is configured to control the air outlet of the compressor to be in communication with at least one of the first heat exchanger, the first trunk line, and the second trunk line, to implement that at least one of the first heat exchanger, the first trunk line, and the second trunk line exchanges heat.

In some embodiments, the air conditioning circulation loop includes: a compressor, a first heat exchanger, a second heat exchanger, and a third heat exchanger. The compressor includes an air inlet and an air outlet. The air outlet of the compressor, the first heat exchanger, the second heat exchanger, the third heat exchanger, and the air inlet of the compressor are connected in sequence. The first trunk line is connected to the first heat exchanger in parallel. The second trunk line is connected to the first heat exchanger in parallel. The first trunk line is connected to the third heat exchanger in parallel. The second trunk line is connected to the third heat exchanger in parallel. The controller is configured to: control the air outlet of the compressor to be in communication with at least one of the first heat exchanger, the first trunk line, and the second trunk line, to implement that at least one of the first heat exchanger, the first trunk line, and the second trunk line exchanges heat; or control the second heat exchanger to be in communication with at least one of the first trunk line, the second trunk line, and the third heat exchanger, to implement that at least one of the first trunk line, the second trunk line, and the third heat exchanger exchanges heat.

In some embodiments, the heat management system further includes a first switch valve and a second switch valve. The first switch valve is connected between a second end of the battery heat exchange module and the third heat exchanger in series. The second switch valve is connected between the second end of the battery heat exchange module and the second heat exchanger in series.

In some embodiments, a first sensor and a second sensor are arranged in the first trunk line. The first sensor is located at a first end of the first heat exchange assembly. The second sensor is located at a second end of the first heat exchange assembly. A third sensor and a fourth sensor are further arranged in the second trunk line. The third sensor is located at a first end of the second heat exchange assembly. The fourth sensor is located at a second end of the second heat exchange assembly.

In some embodiments, the first sensor, the second sensor, and a first flow rate regulating element are arranged in the first trunk line. The first sensor is located at the first end of the first heat exchange assembly. The first flow rate regulating element is located at the second end of the first heat exchange assembly. The second sensor is arranged between the second end of the first heat exchange assembly and the first flow rate regulating element. The third sensor, the fourth sensor, and a second flow rate regulating element are further arranged in the second trunk line. The third sensor is located at the first end of the second heat exchange assembly. The second flow rate regulating element is located at the second end of the second heat exchange assembly. The fourth sensor is arranged between the second end of the second heat exchange assembly and the second flow rate regulating element.

In some embodiments, the heat management system further includes a third switch valve and a fourth switch valve. The third switch valve is arranged in the first trunk line. The fourth switch valve is arranged in the second trunk line.

In some embodiments, the heat management system includes an air conditioning circulation loop. The air conditioning circulation loop includes a cooling branch. The first trunk line is connected to the cooling branch in parallel. The second trunk line is connected to the cooling branch in parallel. The controller is configured to control at least one of the cooling branch, the first trunk line, and the second trunk line to exchange heat.

In some embodiments, the heat management system further includes a series branch. One end of the series branch is connected to the first trunk line. The other end of the series branch is connected to the second trunk line. The controller is further configured to control, according to the temperature of the battery, the series branch to implement a series connection between the first trunk line and the second trunk line.

Specifically, a first interface of the first heat exchange assembly is connected to a second interface of the second heat exchange assembly through the series branch.

Optionally, the series branch includes a switch valve, and the first interface of the first heat exchange assembly is connected to the second interface of the second heat exchange assembly through the switch valve.

In some embodiments, the first sensor is arranged between one end of the series branch and the first interface of the first heat exchange assembly. The third sensor is arranged between the other end of the series branch and the second interface of the second heat exchange assembly.

In some embodiments, the first heat exchange assembly is arranged on one side of the battery, and the second heat exchange assembly is arranged on the other side of the battery.

Optionally, at least one of the first heat exchange assembly and the second heat exchange assembly includes a plurality of heat exchange assemblies, and the plurality of heat exchange assemblies are connected in parallel.

Specifically, one of the heat exchange assemblies is arranged in an electrode heat generation area of the battery, and one of the heat exchange assemblies is arranged in a non-electrode heat generation area of the battery.

A vehicle according to an embodiment of the present disclosure includes the heat management system according to any one of the foregoing embodiments.

For the vehicle according to this embodiment of the present disclosure, the heat management system is arranged, so that the frequency of maintenance and battery module replacements can be reduced, improving the charging efficiency and ease of use of the vehicle, while facilitating a proper layout of the vehicle.

Additional aspects and advantages of the present disclosure are partially provided in the following descriptions, and will partially become apparent from the following descriptions, or may be learned from practice of the present disclosure.

### BRIEF DESCRIPTION OF THE DRAWINGS

The foregoing and/or additional aspects and advantages of this application will become apparent and comprehensible in the description of the embodiments made with reference to the following accompanying drawings.
FIG. 1 is a schematic diagram of a structure of a heat management system according to an embodiment of the present disclosure;
FIG. 2 is a schematic diagram of a structure of a heat management system and a dynamic heat management subsystem according to an embodiment of the present disclosure;
FIG. 3 is a schematic diagram of a battery heat exchange module according to an embodiment of the present disclosure;
FIG. 4 is a schematic diagram of a battery heat exchange module according to some embodiments of the present disclosure;
FIG. 5 is a schematic diagram of a battery heat exchange module according to some embodiments of the present disclosure;
FIG. 6 is a schematic diagram of a first implementation of a battery core according to the present disclosure;
FIG. 7 is a schematic diagram of a second implementation of a battery core according to the present disclosure;
FIG. 8 is a schematic diagram of a first implementation of a battery pack according to the present disclosure;
FIG. 9 is a schematic diagram of a second implementation of a battery pack according to the present disclosure; and

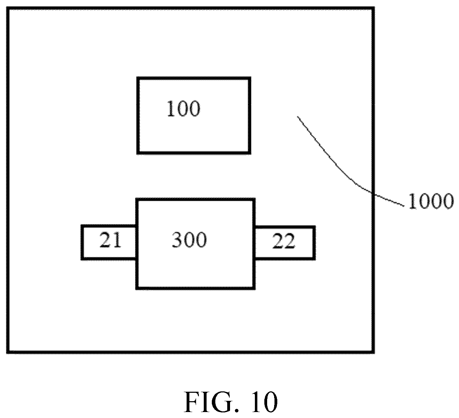

FIG. 10 is a schematic diagram of a vehicle according to some embodiments of the present disclosure.

Reference numerals:
Vehicle 1000,
heat management system 100, dynamic heat management subsystem 200, high-pressure heat management subsystem 201, engine heat management subsystem 202, battery 300, battery core 301, non-electrode heat generation temperature area 301a, electrode heat generation temperature area 301b,
air conditioning circulation loop 101, coolant circulation system 102,
first trunk line 10a, second trunk line 10b, first air exhaust channel 10c, second air exhaust channel 10d, third air exhaust channel 10e, bypass flow channel 10f, series branch 10g,
compressor 11, first heat exchanger 12, in-vehicle condenser 120, second heat exchanger 13, out-of-vehicle condenser 130, third heat exchanger 14, evaporator 140, gas-liquid separator 15,
first heat exchange assembly 21, second heat exchange assembly 22,
first sensor 31, second sensor 32, third sensor 33, fourth sensor 34, fifth sensor 35,
first one-way valve 41, second one-way valve 42, third one-way valve 43, fourth one-way valve 44, fifth one-way valve 45,
first on-off valve 51, second on-off valve 52, third on-off valve 53, fourth on-off valve 54, fifth on-off valve 55, sixth on-off valve 56, series switch valve 57, parallel switch valve 58
first electronic expansion valve 61, second electronic expansion valve 62, third electronic expansion valve 63, fourth electronic expansion valve 64,
fourth heat exchanger 71, charging and distribution/motor assembly 72, first radiator 73, switching valve group 74, water pump 75, fifth heat exchanger 76, engine assembly 77, second radiator 78,
first pressure sensor 81, first temperature sensor 82.

### DETAILED DESCRIPTION

Embodiments of the present disclosure are described in detail below, and examples of the embodiments are shown in accompanying drawings, where the same or similar elements or the elements having same or similar functions are denoted by the same or similar reference numerals throughout the descriptions. The embodiments described below with reference to the accompanying drawings are exemplary and used only for explaining the present disclosure, and should not be construed as a limitation on the present disclosure.

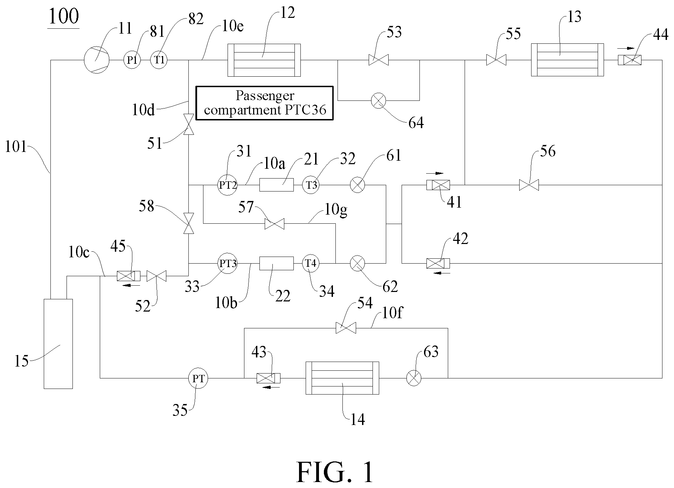

A heat management system 100 according to an embodiment of the present disclosure is described below with reference to FIG. 1 to FIG. 5.

The heat management system 100 according to this embodiment of the present disclosure includes a battery heat exchange module and a controller. The battery heat exchange module includes: a first trunk line 10a and a second trunk line 10b. A first heat exchange assembly 21 is arranged in the first trunk line 10a, and a second heat exchange assembly 22 is arranged in the second trunk line 10b. The first heat exchange assembly 21 and the second heat exchange assembly 22 are configured to exchange heat with a battery.

The heat management system 100 according to the present disclosure is applied to a vehicle. The vehicle may be a fuel vehicle, a gas vehicle, a new energy vehicle, or a rail vehicle. The new energy vehicle may be a battery electric vehicle, a hybrid vehicle, an extended-range electric vehicle, or the like. The battery heat exchange module in the heat management system 100 is suitable for exchanging heat with the battery of the vehicle. The battery may be used to supply power to the vehicle. For example, the battery may be used as an operating power source of the vehicle or a driving power source of the vehicle, to replace or partially replace fuel, natural gas, or the like to provide driving power for the vehicle. Alternatively, the battery may be used to supply power to components of the vehicle, for example, a motor, so that the battery can be used for a working power requirement of at least one of starting, navigation, driving, and the like of the vehicle.

The first heat exchange assembly 21 and the second heat exchange assembly 22 may exchange heat with the battery, to adjust a temperature of the battery, so that the battery has a suitable working temperature, thereby ensuring that the battery works stably and reliably. For example, when an ambient temperature is relatively low in winter, the battery may be heated, to increase a starting speed of the battery. In another example, when an ambient temperature is excessively high in summer or a working temperature of the battery is relatively high, the battery may be cooled, to improve the working security of the battery and extend a working life of the battery.

The heat management system 100 according to the present disclosure further includes a controller. The controller is configured to control, according to a temperature of the battery, at least one of the first trunk line 10a and the second trunk line 10b to exchange heat with the battery. However, the first heat exchange assembly 21 is arranged in the first trunk line 10a, and the second heat exchange assembly 22 is arranged in the second trunk line 10b. Therefore, the controller may control one of the first heat exchange assembly 21 and the second heat exchange assembly 22 to exchange heat with the battery. A working medium circulating in the first trunk line 10a may be the same as or different from a working medium circulating in the second trunk line 10b. The working medium may be water, another liquid working medium other than water, or another medium such as carbon dioxide or a refrigerant that may undergo a phase change. For example, the liquid working medium circulates in the first trunk line 10a, and the medium that may undergo a phase change circulates in the second trunk line 10b. For example, the first trunk line 10a may be connected to a high-pressure cooling system or an engine cooling system, and a coolant in the high-pressure cooling system or the engine cooling system circulates; and the second trunk line 10b is connected to an air conditioning system, and a medium undergoing a phase change in the air conditioning system circulates.

The controller may control the first heat exchange assembly 21 to exchange heat with the battery, may further control the second heat exchange assembly 22 to exchange heat with the battery, or may further control both the first heat exchange assembly 21 and the second heat exchange assembly 22 to exchange heat with the battery. This may be selected according to an actual requirement of the battery.

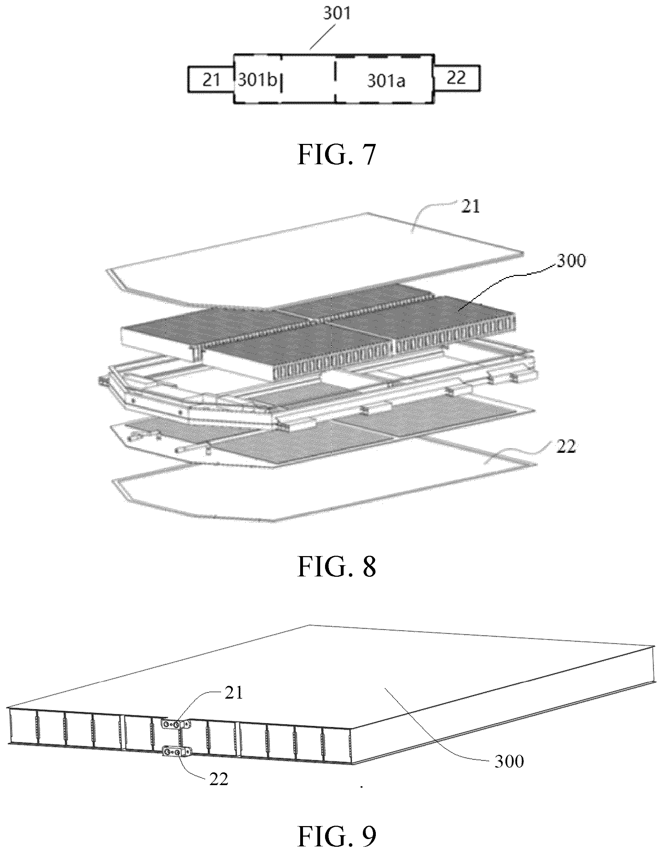

For example, FIG. 8 is a schematic diagram of an implementation of a battery pack according to the present disclosure. The battery pack includes a battery, a first heat exchange assembly 21, and a second heat exchange assembly 22. The battery is arranged between the first heat exchange assembly 21 and the second heat exchange assembly 22. The first heat exchange assembly 21 is arranged on one side (upper) of the battery, and the second heat exchange assembly 22 is arranged on the other side (lower) of the battery. The first heat exchange assembly is an upper cover of the battery, and the second heat exchange assembly is a bottom plate of the battery. When the battery requires a very large quantity of heat to be exchanged, both a first trunk line 10a and a second trunk line 10b may be allowed to exchange heat. When the battery requires a relatively small quantity of heat to be exchanged, one of the first trunk line 10a and the second trunk line 10b may be allowed to exchange heat. The first heat exchange assembly 21 is arranged on one side of the battery, and the second heat exchange assembly 22 is arranged on the other side of the battery. When a quantity of heat generated on one side of the battery is greater than a normal working temperature of the battery, the controller controls a heat exchange assembly corresponding to the side to cool the battery.

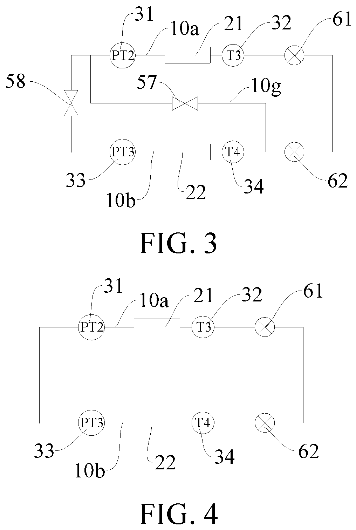

When the battery requires a very large quantity of heat to be exchanged, both the first trunk line 10a and the second trunk line 10b may be allowed to exchange heat. When the battery requires a relatively small quantity of heat to be exchanged, one of the first trunk line 10a and the second trunk line 10b may be allowed to exchange heat. The first heat exchange assembly 21 is arranged on one side of the battery, and the second heat exchange assembly 22 is arranged on the other side of the battery. When a quantity of heat generated on one side of the battery is greater than a normal working temperature of the battery, the controller controls a heat exchange assembly corresponding to the side to cool the battery; or
may control, according to the temperature of the battery, at least one of the first trunk line 10a and the second trunk line 10b to exchange heat with the battery. When the first trunk line 10a and the second trunk line 10b are connected in parallel (as shown in FIG. 4), a quantity of working mediums entering the first trunk line 10a and the second trunk line 10b is controlled according to the temperature of the battery, to flexibly heat the battery and save energy.

The first heat exchange assembly 21 and the second heat exchange assembly 22 are components independent of each other and may work independently of each other. The first trunk line and the second trunk line have different heat exchange modes. When the first heat exchange assembly 21 and the second heat exchange assembly 22 are arranged in different areas of the battery, a heat exchange effect of the first heat exchange assembly 21 and a heat exchange effect of the second heat exchange assembly 22 may be opposite. For example, the first heat exchange assembly 21 heats the battery, and the second heat exchange assembly 22 cools the battery simultaneously, to cause a temperature of the battery to be uniform. A heat management mode of the battery heat exchange module includes: both the first trunk line and the second trunk line perform heating or cooling; and one of the first trunk line and the second trunk line performs heating and the other performs cooling. Different heat management modes are adapted according to temperatures of different areas of the battery, to cause the temperature of the battery to be uniform.

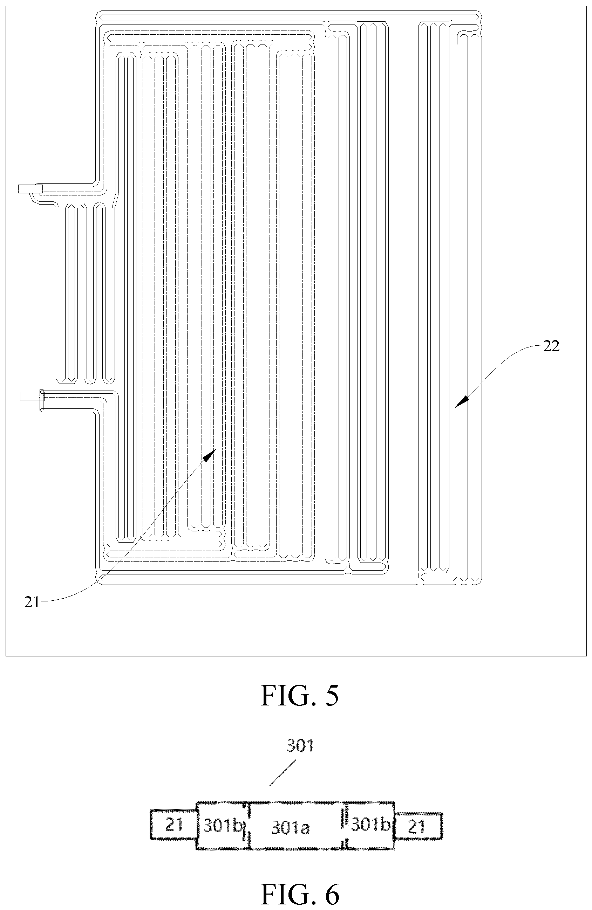

For example, FIG. 6 is a schematic diagram of a first implementation of a battery core according to the present disclosure. FIG. 7 is a schematic diagram of a second implementation of a battery core according to the present disclosure. The battery includes multiple battery cores, and the multiple battery cores are arranged in the battery. Electrodes are arranged at both ends of a battery core 301. Alternatively, an electrode may be arranged at one end of a battery core 301. When the battery core 301 is working, the electrode generates a large quantity of heat, and an area near the electrode is an electrode heat generation area, and an area far from the electrode is a non-electrode heat generation area. Usually, when the battery 300 is working, the electrode generates a large quantity of heat, to cause a temperature of the area near the electrode to be much greater than a temperature of an electrode area. On one side or both sides of the battery, the first heat exchange assembly 21 is correspondingly arranged in an electrode heat generation temperature area 301b, and the second heat exchange assembly 22 is arranged in a non-electrode heat generation temperature area 301a of the battery. When a temperature of the electrode heat generation temperature area 301b is greater than the working temperature of the battery, the first heat exchange assembly 21 cools the electrode heat generation temperature area 301b. When a temperature of the non-electrode heat generation temperature area 301a of the battery is less than the working temperature of the battery, the second heat exchange assembly 22 heats the non-electrode heat generation temperature area 301a of the battery.

For example, under a condition, the efficiency of the first heat exchange assembly 21 or the second heat exchange assembly 22 independently exchanging heat with the battery may be less than the efficiency of the first heat exchange assembly 21 and the second heat exchange assembly 22 together exchanging heat with the battery. In addition, the first heat exchange unit and the second heat exchange unit may alternatively have different efficiency of exchanging heat with the battery. Therefore, the controller is arranged to cause the first heat exchange assembly 21 or the second heat exchange assembly 22, or a combination of the first heat exchange assembly 21 and the second heat exchange assembly 22 to exchange heat with the battery. The battery heat exchange module exchanges heat with the battery with different efficiency. According to the temperature of the battery, the battery heat exchange module is caused to exchange heat with the battery with appropriate efficiency. In this case, energy consumption of the heat management system 100 can be reduced and the functionality of the heat management system 100 can be improved.

It should be noted that the first heat exchange assembly 21 and the second heat exchange assembly 22 may be areas (as shown in FIG. 5) corresponding to different pipelines on a same heat exchange plate, that is, the pipeline in the first heat exchange assembly 21 and the pipeline in the second heat exchange assembly 22 may be located on the same heat exchange plate.

The first heat exchange assembly 21 and the second heat exchange assembly 22 may alternatively be separate assemblies.

The first heat exchange assembly 21 and the first heat exchange assembly 22 may be located on a same side of the battery. According to temperatures of various parts of the battery, at least one of the first heat exchange assembly 21 and the first heat exchange assembly 22 may be selected for a heat exchange, to control temperatures of different areas on the same side of the battery, thereby improving the temperature uniformity of the battery, and improving the performance of the battery.

The first heat exchange assembly 21 and the first heat exchange assembly 22 may be located on different sides of the battery. Compared with being located on the same side of the battery, being arranged on the different sides of the battery and heating the battery differently may further improve the temperature uniformity of the battery and improve the performance of the battery.

The first heat exchange assembly 21 and the second heat exchange assembly 22 may come into contact with the battery core of the battery, and directly exchange heat with the battery core. For example, the first heat exchange assembly 21 and the second heat exchange assembly 22 may be an upper cover of the battery, or the first heat exchange assembly 21 and the second heat exchange assembly 22 may be a lower cover of the battery.

The first heat exchange assembly 21 and the second heat exchange assembly 22 may come into contact with a battery pack, to indirectly exchange heat with the battery core.

For the heat management system 100 according to this embodiment of the present disclosure, the first heat exchange assembly 21 and the second heat exchange assembly 22 are arranged, and the controller is arranged to control at least one of the first heat exchange assembly 21 and the second heat exchange assembly 22 to exchange heat with the battery. The battery heat exchange module exchanges heat with the battery with different efficiency or in different heat management modes. According to the temperature of the battery, the controller causes the battery heat exchange module to exchange heat with the battery with the appropriate efficiency or in the different heat management modes. In this case, energy consumption of the heat management system 100 can be reduced and the functionality of the heat management system 100 can be improved.

In some embodiments of the present disclosure, the first heat exchange assembly 21 is arranged in an electrode heat generation area of the battery, and the second heat exchange assembly 22 is disposed in a non-electrode heat generation area of the battery, thereby improving the temperature uniformity of the battery and improving the performance of the battery.

In some embodiments of the present disclosure, a working medium circulates in both the first trunk line 10a and the second trunk line 10b, and the working medium is suitable for exchanging heat with the battery at the first heat exchange assembly 21 and the second heat exchange assembly 22, thereby heating or cooling the battery.

In some embodiments of the present disclosure, the heat management system 100 further includes an air conditioning circulation loop 101. The air conditioning circulation loop 101 includes a heating branch. The first trunk line 10a is connected to the heating branch in parallel. The second trunk line 10b is connected to the heating branch in parallel. The controller is configured to control at least one of the heating branch, the first trunk line 10a, and the second trunk line 10b to exchange heat.

The heat management system 100 further includes an air conditioning circulation loop 101, and the air conditioning circulation loop 101 is suitable for exchanging heat with a passenger compartment. For example, when an ambient temperature is relatively low in winter, the air conditioning circulation loop 101 may heat the passenger compartment; and when the ambient temperature is excessively high in summer, the air conditioning circulation loop 101 may cool the passenger compartment, to improve use comfort of a user. Optionally, a working medium circulates in the air conditioning circulation loop 101, and exchanges heat on the heating branch, to be suitable for heating or cooling the passenger compartment.

The heating branch of the air conditioning circulation loop 101 is configured to exchange heat with the passenger compartment, to heat the passenger compartment. The heating branch is connected to both the first trunk line 10a and the second trunk line 10b in parallel. The heating branch, the first trunk line 10a, and the second trunk line 10b all work independently of each other. Heating the passenger compartment and exchanging heat with the battery do not conflict with each other.

The controller may control the heating branch to exchange heat separately, may control the first heat exchange assembly 21 in the first trunk line 10a to exchange heat separately, or may further control the second heat exchange assembly 22 in the second trunk line 10b to exchange heat separately. Alternatively, the controller may further control the heating branch, the first trunk line 10a, and the second trunk line 10b to cooperate with each other to perform heating together. Alternatively, the controller may further control the heating branch, the first trunk line 10a, and the second trunk line 10b to exchange heat simultaneously. While controlling the heating branch to heat the passenger compartment, the controller may control the battery heat exchange module to heat the battery. While controlling the heating branch to heat the passenger compartment, the controller may further control the battery heat exchange module to cool the battery.

In some embodiments of the present disclosure, the air conditioning circulation loop 101 includes: a cooling branch. The first trunk line 10a is connected to the cooling branch in parallel, the second trunk line 10b is connected to the cooling branch in parallel, and the controller is configured to control at least one of the cooling branch, the first trunk line 10a, and the second trunk line 10b to exchange heat.

The cooling branch of the air conditioning circulation loop 101 is configured to exchange heat with the passenger compartment, to cool the passenger compartment. The cooling branch is connected to both the first trunk line 10a and the second trunk line 10b in parallel. The cooling branch, the first trunk line 10a, and the second trunk line 10b all work independently of each other. Cooling the passenger compartment and exchanging heat with the battery do not conflict with each other.

The controller may control the heating branch to exchange heat separately, may control the first heat exchange assembly 21 in the first trunk line 10a to exchange heat separately, or may further control the second heat exchange assembly 22 in the second trunk line 10b to exchange heat separately. Alternatively, the controller may further control the heating branch, the first trunk line 10a, and the second trunk line 10b to exchange heat simultaneously. While controlling the heating branch to cool the passenger compartment, the controller may control the battery heat exchange module to heat the battery. While controlling the heating branch to cool the passenger compartment, the controller may further control the battery heat exchange module to cool the battery.

In some embodiments of the present disclosure, the air conditioning circulation loop 101 includes: a cooling branch and a heating branch. The first trunk line 10a is connected to the cooling branch in parallel, the second trunk line 10b is connected to the cooling branch in parallel, the first trunk line 10a is connected to the heating branch in parallel, and the second trunk line 10b is connected to the heating branch in parallel. The controller is configured to control at least one of the heating branch, the cooling branch, the first trunk line 10a, and the second trunk line 10b to exchange heat.

The heat management system 100 further includes an air conditioning circulation loop 101, and the air conditioning circulation loop 101 is suitable for exchanging heat with a passenger compartment. For example, when an ambient temperature is relatively low in winter, the air conditioning circulation loop 101 may heat the passenger compartment; and when the ambient temperature is excessively high in summer, the air conditioning circulation loop 101 may cool the passenger compartment, to improve use comfort of a user. The air conditioning circulation loop 101 includes: a cooling branch and a heating branch. The cooling branch of the air conditioning circulation loop 101 is configured to exchange heat with the passenger compartment to cool the passenger compartment. The heating branch of the air conditioning circulation loop 101 is configured to exchange heat with the passenger compartment to heat the passenger compartment. Optionally, a working medium circulates in the air conditioning circulation loop 101, that is, circulates in the heating branch and the cooling branch, to be suitable for heating or cooling the passenger compartment.

The cooling branch is connected to both the first trunk line 10a and the second trunk line 10b in parallel. In addition, the heating branch is connected to both the first trunk line 10a and the second trunk line 10b in parallel. Therefore, the cooling branch, the heating branch, the first trunk line 10a, and the second trunk line 10b all work independently of each other. Exchanging heat with the passenger compartment and exchanging heat with the battery do not conflict with each other.

The controller may control the heating branch to exchange heat separately, may control the cooling branch to exchange heat separately, may control the first heat exchange assembly 21 in the first trunk line 10a to exchange heat separately, or may further control the second heat exchange assembly 22 in the second trunk line 10b to exchange heat separately.

Alternatively, the controller may further control any combination of the cooling branch, the heating branch, the first trunk line 10a, and the second trunk line 10b to exchange heat simultaneously. While controlling the cooling branch to cool the passenger compartment, the controller may control the battery heat exchange module to heat the battery. While controlling the cooling branch to cool the passenger compartment, the controller may further control the battery heat exchange module to cool the battery. While controlling the heating branch to heat the passenger compartment, the controller may control the battery heat exchange module to heat the battery. While controlling the heating branch to heat the passenger compartment, the controller may further control the battery heat exchange module to cool the battery. While controlling the cooling branch to cool the passenger compartment, the controller may control the heating branch to heat the passenger compartment. While controlling the cooling branch to cool the passenger compartment and controlling the heating branch to heat the passenger compartment, the passenger compartment may further control a battery unit to exchange heat with the battery.

The heating branch and the heating branch of the air conditioning circulation loop 101 are respectively connected to the first trunk line 10a and the second trunk line 10b in parallel, and work independently of each other. A control valve is arranged, so that the heat management system 100 can be controlled to implement different functions, and the different functions may be executed simultaneously. The heat management system 100 has the relatively strong functionality, thereby improving the working efficiency of the heat management system 100.

In some embodiments of the present disclosure, the heat management system 100 further includes: a storage device. The storage device is connected between an air outlet of a compressor 11 and an air inlet of the compressor 11.

When the compressor 11 is working, a working medium flows in from the air inlet of the compressor 11. After being compressed by the compressor 11, a low-temperature and low-pressure gaseous working medium becomes a high-temperature and high-pressure gaseous working medium that flows out from the air outlet of the compressor 11. The working medium may flow back to the compressor 11 again after performing a heat exchange. In this case, circulation is completed once.

The storage device is connected between the air outlet of the compressor 11 and the air inlet of the compressor 11. A reservoir is constructed such that a working medium may be stored and that the stored working medium is discharged. It may be understood that a phase state of the working medium used when the working medium performs heating during a heat exchange is different from a phase state of the working medium used when the working medium performs cooling during a heat exchange. With a same mass, a volume of a gaseous working medium is greater than a volume of a liquid working medium, resulting in a quantity of working mediums required during heating being different from a quantity of working mediums required during cooling. The reservoir is arranged, so that the working medium can be stored and the stored working medium can be discharged. A quantity of working medium may be supplied or reduced according to a temperature of the battery.

It may be understood that the liquid working medium is more convenient to store. Therefore, in some embodiments of the present disclosure, the reservoir is constructed such that the working medium may release heat and liquefy in the reservoir, and the reservoir may store the liquid working medium. The reservoir is connected between the air outlet of the compressor 11 and the air inlet of the compressor 11. The reservoir may liquefy the working medium flowing out from the air outlet of the compressor 11 and store a liquefied working medium inside.

In some embodiments of the present disclosure, the controller controls, according to the temperature of the battery, the storage device to supply a working medium to the first trunk line 10a or/and the second trunk line 10b. The controller may control, according to the temperature of the battery, the storage device to supply a working medium to or reduce a working medium from the first trunk line 10a or/and the second trunk line 10b.

The phase state of the working medium used when the working medium heats the battery is different from the phase state of the working medium used when the battery is cooled. With a same mass, a volume of a gaseous working medium is greater than a volume of a liquid working medium, resulting in a quantity of working mediums required during heating of the battery being different from a quantity of working mediums required during cooling of the battery. When the battery heat exchange module heats the battery, the controller controls the reservoir to release the stored working medium and to supply the stored working medium into the first trunk line 10a and/or the second trunk line 10b, to meet the quantity of working mediums required during heating of the battery. When the battery heat exchange module cools the battery, the reservoir stores a working medium flowing through, and reduces a quantity of working mediums in the first trunk line 10a and/or the second trunk line 10b, to meet the quantity of working mediums required during cooling of the battery.

In some embodiments of the present disclosure, the reservoir is constructed as a liquid storage dryer that is constructed such that a liquid working medium may be stored and that the stored liquid working medium is discharged. The liquid storage dryer may further filter out moisture and impurities in the working medium, to avoid damage or blockage to a working medium pipeline, extend a service life of the working medium pipeline, and make the working medium flow smoothly.

In some embodiments of the present disclosure, the air conditioning circulation loop 101 includes: a compressor 11, a first heat exchanger 12, and a second heat exchanger 13. The compressor 11 includes an air inlet and an air outlet. The air outlet of the compressor 11, the first heat exchanger 12, the second heat exchanger 13, and the air inlet of the compressor 11 are connected in sequence.

When the air conditioning circulation loop 101 is working, a working medium flows in from the air inlet of the compressor 11. After being compressed by the compressor 11, a low-temperature and low-pressure gaseous working medium becomes a high-temperature and high-pressure gaseous working medium that flows out from the air outlet of the compressor 11. A first port of the first heat exchanger 12 is connected to the air outlet of the compressor 11, a second port of the first heat exchanger 12 is connected to the second heat exchanger 13, and the second heat exchanger 13 is connected to the air inlet of the compressor 11. Therefore, after flowing out from the compressor 11, the working medium flows through the first heat exchanger 12, then flows through the second heat exchanger 13, and after performing another heat exchange, finally returns to the compressor 11, thereby forming a working medium loop. In this case, circulation is completed once.

The heating branch includes the first heat exchanger 12, the first trunk line 10a is connected to the first heat exchanger 12 in parallel, and the second trunk line 10b is connected to the first heat exchanger 12 in parallel. The controller is configured to control the air outlet of the compressor 11 to be in communication with at least one of the first heat exchanger 12, the first trunk line 10a, and the second trunk line 10b, to cause at least one of the first heat exchanger 12, the first trunk line 10a, and the second trunk line 10b to exchange heat.

The heating branch is connected to the first trunk line 10a in parallel, and the heating branch is connected to the second trunk line 10b in parallel. The first heat exchanger 12 on the heating branch is connected to both the first heat exchange assembly 21 in the first trunk line 10a and the second heat exchange assembly 22 in the second trunk line 10b in parallel. The first heat exchanger 12, the first heat exchange assembly 21, and the second heat exchange assembly 22 work independently of each other.

The air outlet of the compressor 11 is selectively connected to at least one of the heating branch, the first trunk line 10a, and the second trunk line 10b. The working medium flowing out from the air outlet of the compressor 11 is a high-temperature and high-pressure gaseous working medium. Therefore, when the air outlet of the compressor 11 is connected to one of the heating branch, the first trunk line 10a, and the second trunk line 10b, the heating branch, the first trunk line 10a, and the second trunk line 10b perform heating.

The controller may control the air outlet of the compressor 11 to be in communication with the heating branch, to cause the first heat exchanger 12 to exchange heat. The controller may further control the air outlet of the compressor 11 to be in communication with the first trunk line 10a, to control the first heat exchange assembly 21 to exchange heat. The controller may further control the air outlet of the compressor 11 to be in communication with the second trunk line 10b, to control the second heat exchange assembly 22 to exchange heat. The controller may further control the air outlet of the compressor 11 to be simultaneously in communication with several of the heating branch, the first trunk line 10a, and the second trunk line 10b, to control the first heat exchanger 12, the first heat exchange assembly 21, or the second heat exchange assembly 22 to simultaneously exchange heat. Optionally, while controlling the first heat exchanger 12 to heat the passenger compartment, the controller may control the battery heat exchange module to heat the battery.

In some embodiments of the present disclosure, the air conditioning circulation loop 101 includes: a compressor 11, a second heat exchanger 13, and a third heat exchanger 14. The compressor 11 includes an air inlet and an air outlet. The air outlet of the compressor 11, the second heat exchanger 13, the third heat exchanger 14, and the air inlet of the compressor 11 are connected in sequence.

The cooling branch includes the third heat exchanger 14, the first trunk line 10a is connected to the third heat exchanger 14 in parallel, and the second trunk line 10b is connected to the third heat exchanger 14 in parallel. The controller is configured to control the second heat exchanger 13 to be in communication with at least one of the third heat exchanger 14, the first trunk line 10a, and the second trunk line 10b, to implement that at least one of the third heat exchanger 14, the first trunk line 10a, and the second trunk line 10b exchanges heat.

When the air conditioning circulation loop 101 is working, a working medium flows in from the air inlet of the compressor 11. After being compressed by the compressor 11, a low-temperature and low-pressure gaseous working medium becomes a high-temperature and high-pressure gaseous working medium that flows out from the air outlet of the compressor 11. A first port of the second heat exchanger 13 is connected to the air outlet of the compressor 11, a second port of the second heat exchanger 13 is connected to the third heat exchanger 14, and the third heat exchanger 14 is connected to the air inlet of the compressor 11. Therefore, after flowing out from the compressor 11, a working medium flows through the second heat exchanger 13, and then flows through the third heat exchanger 14. The working medium releases heat and liquefies in the second heat exchanger 13, and then after undergoing throttling and a pressure reduction, enters the third heat exchanger 14 to absorb heat and vaporize, thereby performing cooling in the third heat exchanger 14. A gaseous working medium finally returns to the compressor 11, thereby forming a working medium loop. In this case, circulation is completed once.

The cooling branch is connected to the first trunk line 10a in parallel, and the cooling branch is connected to the second trunk line 10b in parallel. The third heat exchanger 14 on the cooling branch is connected to both the first heat exchange assembly 21 in the first trunk line 10a and the second heat exchange assembly 22 in the second trunk line 10b in parallel. The first heat exchanger 14, the first heat exchange assembly 21, and the second heat exchange assembly 22 work independently of each other.

The controller may control the second heat exchanger 13 to be in communication with the cooling branch, to cause the third heat exchanger 14 to exchange heat. The controller may further control the second heat exchanger 13 to be in communication with the first trunk line 10a, to control the first heat exchange assembly 21 to exchange heat. The controller may further control the second heat exchanger 13 to be in communication with the second trunk line 10b, to control the second heat exchange assembly 22 to exchange heat. The controller may further control the second heat exchanger 13 to be simultaneously in communication with several of the cooling branch, the first trunk line 10a, and the second trunk line 10b, to control the third heat exchanger 14, the first heat exchange assembly 21, or the second heat exchange assembly 22 to simultaneously exchange heat. Optionally, while controlling the third heat exchanger 14 to cool the passenger compartment, the controller may control the battery heat exchange module to cool the battery.

In some embodiments of the present disclosure, the air conditioning circulation loop 101 includes: a compressor 11, a first heat exchanger 12, a second heat exchanger 13, and a third heat exchanger 14. The compressor 11 includes an air inlet and an air outlet. The air outlet of the compressor 11, the first heat exchanger 12, the second heat exchanger 13, the third heat exchanger 14, and the air inlet of the compressor 11 are connected in sequence.

When the air conditioning circulation loop 101 is working, a working medium flows in from the air inlet of the compressor 11. After being compressed by the compressor 11, a low-temperature and low-pressure gaseous working medium becomes a high-temperature and high-pressure gaseous working medium that flows out from the air outlet of the compressor 11. A first port of the first heat exchanger 12 is connected to the air outlet of the compressor 11, a second port of the first heat exchanger 12 is connected to a first port of the second heat exchanger 13, a second port of the second heat exchanger 13 is connected to a first port of the third heat 14, and a second port of the third heat exchanger 14 is connected to the air inlet of the compressor 11. Therefore, after flowing out from the compressor 11, the working medium flows through the first heat exchanger 12, then flows through the second heat exchanger 13, next flows through the third heat exchanger 14, and finally returns to the compressor 11, thereby forming a working medium loop. In this case, circulation is completed once. The working medium exchanges heat in at least one of the first heat exchanger 12, the second heat exchanger 13, and the third heat exchanger 14. Then a gaseous working medium is formed and returns to the air inlet of the compressor 11.

The heating branch includes the first heat exchanger 12, the cooling branch includes the third heat exchanger 14, the first trunk line 10a is connected to the first heat exchanger 12 in parallel, the second trunk line 10b is connected to the first heat exchanger 12 in parallel, the first trunk line 10a is connected to the third heat exchanger 14 in parallel, and the second trunk line 10b is connected to the third heat exchanger 14 in parallel. The second heat exchanger 13 may be located on the heating branch. The second heat exchanger 13 may alternatively be located on the cooling branch. The second heat exchanger 13 may alternatively be used only as a pipeline for the working medium to pass through. The working medium neither absorbs nor releases heat in the second heat exchanger 13. This may be selected according to an actual requirement.

The heating branch is connected to the first trunk line 10a in parallel, and the heating branch is connected to the second trunk line 10b in parallel. The first heat exchanger 12 on the heating branch is connected to both the first heat exchange assembly 21 in the first trunk line 10a and the second heat exchange assembly 22 in the second trunk line 10b in parallel. The first heat exchanger 12, the first heat exchange assembly 21, and the second heat exchange assembly 22 work independently of each other. The cooling branch is connected to the first trunk line 10a in parallel, and the cooling branch is connected to the second trunk line 10b in parallel. The third heat exchanger 14 on the cooling branch is connected to both the first heat exchange assembly 21 in the first trunk line 10a and the second heat exchange assembly 22 in the second trunk line 10b in parallel. The first heat exchanger 14, the first heat exchange assembly 21, and the second heat exchange assembly 22 work independently of each other.

Because the heating branch is connected to the first trunk line 10a in parallel, and the heating branch is connected to the second trunk line 10b in parallel, the air outlet of the compressor 11 is selectively connected to at least one of the heating branch, the first trunk line 10a, and the second trunk line 10b, and at least one of the heating branch, the first trunk line 10a, and the second trunk line 10b exchanges heat. Specifically, the working medium flowing out from the air outlet of the compressor 11 is a high-temperature and high-pressure gaseous working medium. Therefore, when the air outlet of the compressor 11 is connected to one of the heating branch, the first trunk line 10a, and the second trunk line 10b, at least one of the heating branch, the first trunk line 10a, and the second trunk line 10b performs heating.

Because the cooling branch is connected to the first trunk line 10a in parallel, and the cooling branch is connected to the second trunk line 10b in parallel, the air inlet of the compressor 11 is selectively connected to at least one of the cooling branch, the first trunk line 10a, and the second trunk line 10b. Similarly, alternatively, the second heat exchanger 13 connected to the other side of the third heat exchanger 14 is selectively connected to at least one of the cooling branch, the first trunk line 10a, and the second trunk line 10b, and at least one of the cooling branch, the first trunk line 10a, and the second trunk line 10b exchanges heat. Optionally, at least one of the cooling branch, the first trunk line 10a, and the second trunk line 10b performs cooling.

The controller is configured to control the air outlet of the compressor 11 to be in communication with at least one of the first heat exchanger 12, the first trunk line 10a, and the second trunk line 10b, to cause at least one of the first heat exchanger 12, the first trunk line 10a, and the second trunk line 10b to exchange heat.

The controller may control the air outlet of the compressor 11 to be in communication with the heating branch, to cause the first heat exchanger 12 to exchange heat. The controller may further control the air outlet of the compressor 11 to be in communication with the first trunk line 10a, to control the first heat exchange assembly 21 to exchange heat. The controller may further control the air outlet of the compressor 11 to be in communication with the second trunk line 10b, to control the second heat exchange assembly 22 to exchange heat. The controller may further control the air outlet of the compressor 11 to be simultaneously in communication with several of the heating branch, the first trunk line 10a, and the second trunk line 10b, to control the first heat exchanger 12, the first heat exchange assembly 21, or the second heat exchange assembly 22 to simultaneously exchange heat. Optionally, while controlling the first heat exchanger 12 to heat the passenger compartment, the controller may control the battery heat exchange module to heat the battery.

Alternatively, the controller is configured to control implementation of communication between the second heat exchanger 13 and at least one of the first trunk line 10a, the second trunk line 10b, and the third heat exchanger 14, to implement that at least one of the first trunk line 10a, the second trunk line 10b, and the third heat exchanger 14 exchanges heat.

The controller may control the second heat exchanger 13 to be in communication with the cooling branch, to cause the third heat exchanger 14 to exchange heat. The controller may further control the second heat exchanger 13 to be in communication with the first trunk line 10a, to control the first heat exchange assembly 21 to exchange heat. The controller may further control the second heat exchanger 13 to be in communication with the second trunk line 10b, to control the second heat exchange assembly 22 to exchange heat. The controller may further control the second heat exchanger 13 to be simultaneously in communication with several of the heating branch, the first trunk line 10a, and the second trunk line 10b, to control the third heat exchanger 14, the first heat exchange assembly 21, or the second heat exchange assembly 22 to simultaneously exchange heat. Optionally, while controlling the third heat exchanger 14 to cool the passenger compartment, the controller may control the battery heat exchange module to cool the battery. Optionally, while controlling the first heat exchanger 12 to cool the passenger compartment, the controller may control the battery heat exchange module to heat the battery.

In some embodiments of the present disclosure, the first heat exchanger 12 is an in-vehicle condenser 120, and the in-vehicle 120 is suitable for heating the passenger compartment. When a working medium flows in a working medium loop formed by the compressor 11 and the in-vehicle condenser 120 together, a high-temperature and high-pressure gaseous working medium flowing out from the air outlet of the compressor 11 exchanges heat at the in-vehicle condenser 120. The working medium releases heat and liquefies. Subsequently, the working medium undergoes throttling and a pressure reduction, absorbs heat and vaporizes, and finally becomes a low-temperature and low-pressure gaseous working medium that flows in from the air inlet of the compressor 11. In this case, circulation is completed once. The in-vehicle condenser 120 may further serve only as a pipeline, and the working medium flows through the in-vehicle condenser 120 without exchanging heat.

In some specific embodiments of the present disclosure, in a working medium loop formed by the compressor 11, the in-vehicle condenser 120, and the second heat exchanger 13 together, a high-temperature and high-pressure gaseous working medium flowing out from the air outlet of the compressor 11 exchanges heat at the in-vehicle condenser 120, and releases heat and liquefies. The in-vehicle condenser 120 is suitable for heating the passenger compartment.

The controller may control the air outlet of the compressor 11 to be in selective communication with at least one of the in-vehicle condenser 120, the first heat exchange assembly 21, and the second heat exchange assembly 22. The controller is arranged to change a flow path of the working medium in the air conditioning circulation loop 101, so that the passenger compartment and/or the battery can be heated.

It may be understood that the air conditioning circulation loop 101 has multiple branches as a whole, and both a working medium loop formed by the compressor 11, the first heat exchanger 12, and the second heat exchanger 13 together and the like are part of the air conditioning circulation loop 101.

In some embodiments of the present disclosure, the second heat exchanger 13 is an out-of-vehicle condenser 130, and a working medium releases heat through the out-of-vehicle condenser 130. The out-of-vehicle condenser 130 may be configured to perform heating. For example, when an ambient temperature is relatively low in winter, a component of a vehicle needs to be preheated and started. The out-of-vehicle condenser 130 heats the component, so that a starting speed of the vehicle can be increased. The out-of-vehicle condenser 130 may further serve only as a pipeline, and the working medium flows through the out-of-vehicle condenser 130 without exchanging heat.

In some embodiments of the present disclosure, the third heat exchanger 14 is an in-vehicle evaporator 140, and the evaporator 140 is suitable for cooling the passenger compartment.

When a working medium flows in a working medium loop formed by the compressor 11 and the evaporator 140 together, a high-temperature and high-pressure gaseous working medium flowing out from the air outlet of the compressor 11 first exchanges heat in the pipeline. The working medium releases heat and liquefies. Subsequently, the working medium undergoes throttling and a pressure reduction, enters the evaporator 140, absorbs heat and vaporizes at the evaporator 140, to cool the evaporator 140, and finally, becomes a low-temperature and low-pressure gaseous working medium that flows in from the air inlet of the compressor 11. In this case, circulation is completed once.

In some specific embodiments of the present disclosure, in a working medium loop formed by the compressor 11, the second heat exchanger 13, and the evaporator 140 together, a high-temperature and high-pressure gaseous working medium flowing out from the air outlet of the compressor 11 exchanges heat at the second heat exchanger 13. The working medium releases heat and liquefies. Subsequently, the working medium enters the evaporator 140 after undergoing throttling and a pressure reduction, absorbs heat and vaporizes at the evaporator 140 that is suitable for cooling the passenger compartment, and finally, becomes a low-temperature and low-pressure gaseous working medium that flows in from the air inlet of the compressor 11. In this case, circulation is completed once.

The controller may control the second heat exchanger 13 to be in selective communication with at least one of the evaporator 140, the first heat exchange assembly 21, and the second heat exchange assembly 22. The controller is arranged to change a flow path of the working medium in the air conditioning circulation loop 101, so that the passenger compartment and/or the battery can be cooled.

In some specific embodiments of the present disclosure, in a working medium loop formed by the compressor 11, the in-vehicle condenser 120, the out-of-vehicle condenser 130, and the evaporator 140 together, a high-temperature and high-pressure gaseous working medium flowing out from the air outlet of the compressor 11 exchanges heat at the in-vehicle condenser 120, and releases heat and liquefies. The in-vehicle condenser 120 is suitable for heating the passenger compartment. The in-vehicle condenser 120 may further serve only as a flow channel, and the working medium flows through the in-vehicle condenser 120 without exchanging heat. Then the working medium continues to flow to the out-of-vehicle condenser 130, and may exchange heat and release heat for a second time at the out-of-vehicle condenser 130. The working medium may further pass through only the out-of-vehicle condenser 130 without exchanging heat at the out-of-vehicle condenser 130. The working medium releasing heat and liquefying undergoes throttling and a pressure reduction, enters the evaporator 140, absorbs heat and vaporizes at the evaporator 140 that is suitable for cooling the passenger compartment, and finally, becomes a low-temperature and low-pressure gaseous working medium that flows in from the air inlet of the compressor 11. In this case, circulation is completed once.

The controller may control the air outlet of the compressor 11 to be in selective communication with at least one of the in-vehicle condenser 120, the first heat exchange assembly 21, and the second heat exchange assembly 22; and may further control the second heat exchanger 13 to be in selective communication with at least one of the evaporator 140, the first heat exchange assembly 21, and the second heat exchange assembly 22. The controller is arranged to change a flow path of the working medium in the air conditioning circulation loop 101, so that the heat management system 100 implements work under different conditions. The heat management system 100 according to the present disclosure has strong functionality.

When the controller controls the air outlet of the compressor 11 to be in communication with the in-vehicle condenser 120, controls the out-of-vehicle condenser 130 to be in communication with the evaporator 140, and controls the air outlet of the compressor 11 not to be in communication with the first trunk line 10a or the second trunk line 10b, the working medium exchanges no heat through the in-vehicle condenser 120, releases heat through the out-of-vehicle condenser 130, and absorbs heat through the evaporator 140. The heat management system 100 may implement a condition that the passenger compartment is separately cooled.

When the controller controls the air outlet of the compressor 11 to be in communication with the in-vehicle condenser 120, controls the out-of-vehicle condenser 130 to be in communication with the first trunk line 10a and the second trunk line 10b, and controls the air outlet of the compressor 11 not to be in communication with the first trunk line 10a or the second trunk line 10b, and the out-of-vehicle condenser 130 is not in communication with the evaporator 140, the working medium exchanges no heat through the in-vehicle condenser 120, releases heat through the out-of-vehicle condenser 130, and absorbs heat through the first heat exchange assembly 21 and/or the second heat exchange assembly 22. The heat management system 100 may implement a condition that the battery is cooled.

When the controller controls the air outlet of the compressor 11 to be in communication with the in-vehicle condenser 120, and controls the out-of-vehicle condenser 130 to be in communication with the first trunk line 10a and the second trunk line 10b, the out-of-vehicle condenser 130 is in communication with the evaporator 140, and the controller controls the air outlet of the compressor 11 not to be in communication with the first trunk line 10a or the second trunk line 10b, the working medium exchanges no heat through the in-vehicle condenser 120, releases heat through the out-of-vehicle condenser 130, absorbs heat through the first heat exchange assembly 21 and/or the second heat exchange assembly 22, and absorbs heat through the evaporator 140. The heat management system 100 may implement a condition that both the battery and the passenger compartment are cooled.

When the controller controls the air outlet of the compressor 11 to be in communication with the in-vehicle condenser 120, and controls the air outlet of the compressor 11 not to be in communication with the first trunk line 10a or the second trunk line 10b, the working medium releases heat through the in-vehicle condenser 120. The heat management system 100 may implement a condition that the passenger compartment is heated.

When the controller controls the air outlet of the compressor 11 to be in communication with the first trunk line 10a and the second trunk line 10b, and controls the air outlet of the compressor 11 not to be in communication with the in-vehicle condenser 120, the working medium releases heat through the first heat exchange assembly 21 and/or the second heat exchange assembly 22. The heat management system 100 may implement a condition that the battery is heated.

When the controller controls the air outlet of the compressor 11 to be in communication with the in-vehicle condenser 120, and controls the air outlet of the compressor 11 to be in communication with the first trunk line 10a and the second trunk line 10b, the working medium releases heat through the in-vehicle condenser 120, and releases heat through the first heat exchange assembly 21 and/or the second heat exchange assembly 22. The heat management system 100 may implement a condition that both the passenger compartment and the battery are heated.

In some embodiments of the present disclosure, the heat management system 100 includes a first air exhaust channel 10c. The battery heat exchange module is connected to the air inlet through the first air exhaust channel 10c. A working medium flowing through the battery heat exchange module may flow back to the air inlet through the air exhaust channel 10c. For example, when cooling the battery, the working medium flows out from the air outlet, releases heat through the out-of-vehicle condenser 130, absorbs heat at the battery heat exchange module, and then flows back to the air inlet through the first air exhaust channel 10c.

The heat management system 100 further includes a second air exhaust channel 10d connected to the air outlet, and the second air exhaust channel 10d is connected to the first air exhaust channel 10c. Therefore, the battery heat exchange module is also connected to the air outlet through the second air exhaust channel 10d, and the working medium may flow to the battery heat exchange module through the second air exhaust channel 10d. For example, when heating the battery, the working medium flows out from the air outlet, flows to the battery heat exchange module through the second air exhaust channel, and releases heat at the battery heat exchange module.

The heat management system 100 further includes a third air exhaust channel 10e that is in communication with the air outlet with the in-vehicle condenser 120. The working medium may flow to the out-of-vehicle condenser 130 through the third air exhaust channel 10e and release heat at the in-vehicle condenser 120.

In some embodiments of the present disclosure, the controller includes multiple control valve groups, and the control valve groups are operated to enable the air outlet to be in communication with at least one of the in-vehicle condenser 120 and the battery heat exchange module, to cause the working medium in the air outlet to flow to the in-vehicle condenser 120 or the battery heat exchange module. The control valve group is arranged, so that a direction of the working medium can be controlled, to control work of the heat management system 100.

In some specific embodiments of the present disclosure, the control valve group includes a first on-off valve 51, a second on-off valve 52, and a third on-off valve 53. The first on-off valve 51 is connected to the second air exhaust channel 10d in series. The third on-off valve 53 is connected between the out-of-vehicle condenser 130 and the air outlet, that is, the third on-off valve 53 is connected to the third air exhaust channel 10e in series. The second on-off valve 52 is connected to the first air exhaust channel 10c in series, and when the second on-off valve 52 is closed, a working medium in the second air exhaust channel 10d is prevented from flowing to a return air port.

The first on-off valve 51 may control on-off of the second air exhaust channel 10d, to control whether the working medium flows from the air outlet to the battery heat exchange module. When the first on-off valve 51 is closed, the working medium is prevented from flowing to the battery heat exchange module. The third on-off valve 53 may control on-off of the third air exhaust channel, to control whether the working medium flows from the air outlet to the out-of-vehicle condenser 130. When the third on-off valve 53 is closed, the working medium is prevented from flowing to the out-of-vehicle condenser 130.

The first air exhaust channel 10c is connected to the return air port, the second air exhaust channel 10d is connected to the air outlet, and the second air exhaust channel 10d is connected to the first air exhaust channel 10c. When the first on-off valve 51 controls circulation of the second air exhaust channel 10d, the working medium flowing out from the air outlet flows from the second air exhaust channel 10d to the first air exhaust channel 10c, and then directly flows back to the return air port. Therefore, the second on-off valve 52 is arranged on the first air exhaust channel 10c, so that the second on-off valve 52 can control on-off of the first air exhaust channel 10c. When the second on-off valve 52 is closed, the working medium on the second air exhaust channel 10d is prevented from flowing to the air inlet.

In some embodiments of the present disclosure, a fourth electronic expansion valve 64 is further included, and the fourth electronic expansion valve 64 is connected to the third on-off valve 53 in parallel.

In some embodiments of the present disclosure, the heat management system 100 further includes a first switch valve 41 and a second switch valve 42. The first switch valve 41 is connected between a second end of the battery heat exchange module and the third heat exchanger 14 in series. The second switch valve 42 is connected between the second end of the battery heat exchange module and the second heat exchanger 13 in series. The first switch valve 41 may control on-off between the battery heat exchange module and the third heat exchanger 14. The second switch valve 42 may control on-off between the battery heat exchange module and the second heat exchanger 13. When one of the first switch valve 41 and the second switch valve 42 is conducted, the first trunk line 10a is connected to the first heat exchanger 12 in parallel, the second trunk line 10b is connected to the first heat exchanger 12 in parallel, the first trunk line 10a is connected to the third heat exchanger 14 in parallel, and the second trunk line 10b is connected to the third heat exchanger 14 in parallel.

In some specific embodiments of the present disclosure, the first switch valve is constructed as the first one-way valve 41, and the first one-way valve 41 is constructed such that a working medium flows from the battery heat exchange module to the third heat exchanger 14. The first one-way valve 41 may control the working medium to flow stably from the battery heat exchange module to the third heat exchanger 14, thereby improving the fluidity of the working medium, preventing the working medium from flowing back, and improving the working stability of the heat management system 100. In addition, the first one-way valve 41 may work stably and continuously, thereby reducing active control, and facilitating control.

In some specific embodiments of the present disclosure, the first switch valve is constructed as the second one-way valve 42, and the second one-way valve 42 is constructed such that a working medium flows from the battery heat exchange module to the second heat exchanger 13. The second one-way valve 42 may control the working medium to flow stably from the second heat exchanger 13 to the battery heat exchange module, thereby improving the fluidity of the working medium, preventing the working medium from flowing back, and improving the working stability of the heat management system 100. In addition, the second one-way valve 42 may work stably and continuously, thereby reducing active control, and facilitating ease of control.

In some embodiments of the present disclosure, a first sensor 31 and a second sensor 32 are arranged in the first trunk line 10a. The first sensor 31 is located at a first end of the first heat exchange assembly 21. The second sensor 32 is located at a second end of the first heat exchange assembly 21. A third sensor 33 and a fourth sensor 34 are arranged in the second trunk line 10b, the third sensor 33 is located at a first end of the second heat exchange assembly 22, and the fourth sensor 34 is located at a second end of the second heat exchange assembly 22.

The sensors are arranged, so that various values of the working medium in the first trunk line 10a and various values of the working medium in the second trunk line 10b can be obtained intuitively and accurately. The controller may control a flow situation of the working medium in the first trunk line 10a and the second trunk line 10b according to the temperature of the battery. This is not only convenient to operate, but also enables the battery to quickly reach a suitable working temperature, thereby improving the working stability of the battery.

In some specific embodiments of the present disclosure, the first sensor 31 is constructed as a pressure sensor, and the first sensor 31 may obtain pressure of the working medium in the first trunk line 10a. The second sensor 32 is constructed as a temperature sensor, and the second sensor 32 may obtain a temperature of the working medium in the first trunk line 10a. The third sensor 33 is constructed as a pressure sensor, and the third sensor 33 may obtain pressure of the working medium in the second trunk line 10b. The fourth sensor 34 is constructed as a temperature sensor, and the fourth sensor 34 may obtain a temperature of the working medium in the second trunk line 10b.

In some embodiments of the present disclosure, the first sensor 31, the second sensor 32, and a first flow rate regulating element are arranged in the first trunk line 10a. The first sensor 31 is located at the first end of the first heat exchange assembly 21. The first flow rate regulating element is located at the second end of the first heat exchange assembly 21. The second sensor 32 is arranged between the second end of the first heat exchange assembly 21 and the first flow rate regulating element. A third sensor 33, a fourth sensor 34, and a second flow rate regulating element are arranged in the second trunk line 10b. The third sensor 33 is located at the first end of the second heat exchange assembly 22. The second flow rate regulating element is located at the second end of the second heat exchange assembly 22. The fourth sensor 34 is arranged between the second end of the second heat exchange assembly 22 and the second flow rate regulating element.

In some specific embodiments of the present disclosure, the first sensor 31 is constructed as a pressure sensor, and the first sensor 31 may obtain pressure of the working medium in the first trunk line 10a. The second sensor 32 is constructed as a temperature sensor, and the second sensor 32 may obtain a temperature of the working medium in the first trunk line 10a. The third sensor 33 is constructed as a pressure sensor, and the third sensor 33 may obtain pressure of the working medium in the second trunk line 10b. The fourth sensor 34 is constructed as a temperature sensor, and the fourth sensor 34 may obtain a temperature of the working medium in the second trunk line 10b.

The first flow rate regulating element may adjust a flow rate of the working medium in the first trunk line 10a, thereby adjusting the pressure in the first trunk line 10a, and playing a role of throttling and a pressure reduction. The second flow rate regulating element may adjust a flow rate of the working medium in the second trunk line 10b, thereby adjusting the pressure in the second trunk line 10b, and playing a role of throttling and a pressure reduction. The pressure of the working medium in the first trunk line 10a and the pressure of the working medium in the second trunk line 10b are caused to fall within a safe range, to prevent excessively large pressure of the working mediums in the first trunk line 10a and the second trunk line 10b from breaking through a pipeline to cause damage to the battery, thereby improving the working stability of the battery.

When a working medium flows in a working medium loop formed by the compressor 11, the in-vehicle condenser 120, the out-of-vehicle condenser 130, and the battery heat exchange module together, the working medium releases heat at the in-vehicle condenser 120 or the out-of-vehicle condenser 130, and then becomes a low-temperature and low-pressure liquid working medium after undergoing throttling and a pressure reduction through the first flow rate regulating element and/or the second flow rate regulating element. The working medium becomes a low-temperature and low-pressure gaseous working medium after absorbing heat and evaporating at the battery heat exchange module. The low-temperature and low-pressure gaseous working medium flows from the air inlet into the compressor 11. In this case, circulation is completed once.

In some embodiments of the present disclosure, the heat exchange element further includes a third switch valve and a fourth switch valve. The third switch valve is arranged in the first trunk line 10a. The fourth switch valve is arranged in the second trunk line 10b.

The third switch valve may control on-off of the first trunk line 10a, and the fourth switch valve may control on-off of the second trunk line 10b, to control flow or stagnation of the working medium in the first trunk line 10a or the second trunk line 10b. The third switch valve and the fourth switch valve work independently of each other.

When the third switch valve is conducted, the first trunk line 10a is connected to the third heat exchanger 14 in parallel, and the first trunk line 10a is selectively connected to the first heat exchanger 12 in parallel. When the fourth switch valve is conducted, the second trunk line 10b is connected to the third heat exchanger 14 in parallel, and the second trunk line 10b is selectively connected to the first heat exchanger 12 in parallel.

In some specific embodiments of the present disclosure, a first electronic expansion valve 61 is arranged in the first trunk line 10a, and a second electronic expansion valve 62 is arranged in the second trunk line 10b. The first sensor 31 is located at the first end of the first heat exchange assembly 21, the first electronic expansion valve 61 is located at the second end of the first heat exchange assembly 21, and the second sensor 32 is arranged between the second end of the first heat exchange assembly 21 and the first electronic expansion valve 61. The third sensor 33 is located at the first end of the second heat exchange assembly 22, the second electronic expansion valve 62 is located at the second end of the second heat exchange assembly 22, and the fourth sensor 34 is arranged between the second end of the second heat exchange assembly 22 and the second electronic expansion valve 62.

The electronic expansion valve has a flow rate regulating function, and the electronic expansion valve may reduce pressure of a working medium flowing through. The electronic expansion valve further has an on-off function, and may selectively close a pipeline, to control flow or stagnation of the working medium in the pipeline in which the electronic expansion valve is located. Therefore, the first electronic expansion valve 61 is arranged in the first trunk line 10a, and the first flow rate regulating element and the third switch valve may be eliminated. Similarly, the second electronic expansion valve 62 is arranged in the second trunk line 10b, and the second flow rate regulating element and the fourth switch valve may be eliminated, thereby reducing a quantity of components and lowering the layout difficulty.

In some specific embodiments of the present disclosure, a fifth switch valve is arranged at a first end of the evaporator 140, and the fifth switch valve is connected between the evaporator 140 and the air inlet of the compressor 11 in series. The fifth switch valve may control on-off of a pipeline in which the evaporator 140 is located. When the fifth switch valve is conducted, the working medium may flow to the compressor 11 through the evaporator 140.

In some specific embodiments of the present disclosure, the fifth switch valve is constructed as a third one-way valve 43, and the third one-way valve 43 is constructed such that the working medium flows from the evaporator 140 to the compressor 11. The third one-way valve 43 may control the working medium to flow stably from the evaporator 140 to the compressor 11, thereby improving the fluidity of the working medium, preventing the working medium from flowing back, and improving the working stability of the heat management system 100. In addition, the third one-way valve 43 may work stably and continuously, thereby reducing active control, and facilitating control.

In some specific embodiments of the present disclosure, a third electronic expansion valve 63 is arranged at a second end of the evaporator 140, and the third electronic expansion valve 63 is connected between the out-of-vehicle condenser 130 and the evaporator 140 in series. The electronic expansion valve has a flow rate regulating function, and the third electronic expansion valve 63 may reduce pressure of a working medium flowing through. The electronic expansion valve further has an on-off function, and may selectively close a pipeline, to control whether the working medium flows to the evaporator 140.

When a working medium flows in a working medium loop formed by the compressor 11, the in-vehicle condenser 120, the out-of-vehicle condenser 130, and the evaporator 140 together, the working medium releases heat at the in-vehicle condenser 120 or the out-of-vehicle condenser 130, and then becomes a low-temperature and low-pressure liquid working medium after undergoing throttling and a pressure reduction through the third electronic expansion valve 63. The working medium becomes a low-temperature and low-pressure gaseous working medium after absorbing heat and evaporating at the evaporator 140. The low-temperature and low-pressure gaseous working medium flows from the air inlet into the compressor 11. In this case, circulation is completed once.

In some embodiments of the present disclosure, the heat management system 100 further includes a bypass flow path 10f, the bypass flow path 10f is connected to a fourth on-off valve 54 in series, and the bypass flow path 10f is connected, in parallel, to the fifth switch valve, the evaporator 140, and the third electronic expansion valve 63 that are connected in parallel. The fourth on-off valve 54 may control flow and isolation of the bypass flow path 10f. When the fourth on-off valve 54 conducts the bypass flow path 10f, the working medium flows back to the air inlet through the bypass flow path 10f. When the fourth on-off valve 54 blocks the bypass flow path 10f, the working medium flows back to the air inlet through a flow path on which the evaporator 140 is located.

In some specific embodiments of the present disclosure, a fifth on-off valve 55 is arranged at a first end of the out-of-vehicle condenser 130, and the fifth on-off valve 55 is connected between the out-of-vehicle condenser 130 and the air outlet of the compressor 11 in series. When the fifth on-off valve 55 is conducted, the working medium may flow to the out-of-vehicle condenser 130.

In some specific embodiments of the present disclosure, a fourth one-way valve 44 is arranged at a second end of the out-of-vehicle condenser 130, and the fourth one-way valve 44 is constructed such that the working medium flows out from the out-of-vehicle condenser 130, thereby improving the fluidity of the working medium and preventing the working medium from flowing back.

In some embodiments of the present disclosure, the heat management system 100 further includes a sixth on-off valve 56. The sixth on-off valve 56 is arranged on a side of the first switch valve 41 away from the battery heat exchange module. When the sixth on-off valve 56 is conducted, the working medium may flow from the battery heat exchange module to the evaporator 140.

In some embodiments of the present disclosure, the heat management system 100 further includes a fifth one-way valve 45. The fifth one-way valve 45 is arranged between the battery heat exchange module and the air inlet of the compressor 11. The fifth one-way valve 45 is constructed such that the working medium flows from the battery heat exchange module to the air inlet of the compressor 11, thereby preventing the working medium that flows to the air inlet from flowing to the heat exchange component, and improving the use safety of the heat exchange component.

In some embodiments of the present disclosure, the heat management system 100 further includes a gas-liquid separator 15. The gas-liquid separator 15 is in communication with the air inlet of the compressor 11. A working medium becomes a low-temperature and low-pressure gaseous working medium after being throttled and evaporating. Because it cannot be completely ensured, through heat absorption and evaporation, that all working mediums are converted into gaseous working mediums, the working medium first needs to flow into the gas-liquid separator 15 before flowing into the compressor 11 again. The gas-liquid separator 15 separates a gaseous working medium from a liquid working medium, and drives only the low-temperature and low-pressure gaseous working medium to flow to the compressor 11, to avoid liquid impact of a liquid droplet on a functional component in the compressor 11 and ensure a safe and normal operation of the compressor 11.

In some embodiments of the present disclosure, the heat management system 100 further includes a series branch 10g, one end of the series branch 10g is connected to the first trunk line 10a, and the other end of the series branch 10g is connected to the second trunk line 10b. The controller is further configured to control, according to the temperature of the battery, the series branch 10g to implement a series connection between the first trunk line 10a and the second trunk line 10b, so that both the first trunk line 10a and the second trunk line 10b exchange heat.

In some specific embodiments of the present disclosure, the first interface of the first heat exchange assembly 21 is connected to the second interface of the second heat exchange assembly 22 through the series branch 10g. The working medium flows in from the second interface of the first heat exchange assembly 21, then flows through the first heat exchange assembly 21, next flows to the second heat exchange assembly 22 through the series branch 10g, and finally flows out from the first interface of the second heat exchange assembly 22.

In some embodiments of the present disclosure, the series branch 10g includes a series switch valve 57, and the first interface of the first heat exchange assembly 21 is connected to the second interface of the second heat exchange assembly 22 through the series switch valve 57. The series switch valve 57 may control on-off of the series branch 10g. When the series switch valve 57 disconnects the series branch 10g, the first trunk line 10a and the second trunk line 10b are connected in parallel. When the series switch valve 57 conducts the series branch 10g, the first trunk line 10a and the second trunk line 10b may be connected in series.

In some embodiments of the present disclosure, the first sensor 31 is arranged between one end of the series branch 10g and the first interface of the first heat exchange assembly 21, and the third sensor 33 is arranged between the other end of the series branch 10g and the second interface of the second heat exchange assembly 22. When the first heat exchange assembly 21 and the second heat exchange assembly 22 are connected in series, the first sensor 31, the second sensor 32, the third sensor 33, and the fourth sensor 34 may all detect information of a working medium.

In some embodiments of the present disclosure, the heat management system 100 further includes a parallel switch valve 58. The parallel switch valve 58 is arranged on one side of the first interface of the first heat exchange assembly 21 and the first interface of the second heat exchange assembly 22. The parallel switch valve 58 may control on-off of the first trunk line10a and the second trunk line 10b. When the parallel switch valve 58 is conducted, the first trunk line 10a and the second trunk line 10b may be connected in parallel.

In some embodiments of the present disclosure, the first heat exchange assembly 21 is arranged on one side of the battery, and the second heat exchange assembly 22 is arranged on the other side of the battery. Heat is exchanged on the different sides of the battery, so that the heat exchange efficiency of the battery can be increased.

In some specific embodiments of the present disclosure, the first heat exchange assembly 21 is a first heat exchange plate, and the second heat exchange assembly 22 is a second heat exchange plate. The first heat exchange plate and the second heat exchange plate are arranged on opposite sides of the battery. Compared with a design manner of arranging a heat exchange plate, the first heat exchange plate and the second heat exchange plate may cool or heat the opposite sides of the battery, so that the efficiency of cooling or heating the battery can be increased, and the battery is caused to quickly reach a suitable working temperature, thereby improving the working stability of the battery.

In some embodiments of the present disclosure, at least one of the first heat exchange assembly 21 and the second heat exchange assembly 22 includes multiple heat exchange assemblies, and the multiple heat exchange assemblies are connected in parallel. The multiple heat exchange assemblies are arranged, so that an area for exchanging heat with the battery can be increased, and the efficiency of exchanging heat with the battery can be further increased.

In some embodiments of the present disclosure, one of the heat exchange assemblies connected in parallel is arranged in an electrode heat generation area of the battery, and another heat exchange assembly is arranged in a non-electrode heat generation area of the battery.

In some embodiments of the present disclosure, one heat exchange assembly is arranged in the electrode heat generation area of the battery, and one heat exchange assembly is arranged in the non-electrode heat generation area of the battery.

According to the temperature of the battery, the controller may control the heat exchange assembly arranged in the electrode heat generation area of the battery to greatly perform cooling, and control the heat exchange assembly arranged in the non-electrode heat generation area of the battery to slightly perform cooling. Alternatively, according to the temperature of the battery, the controller may control the heat exchange assembly arranged in the electrode heat generation area of the battery to perform cooling, and control the heat exchange assembly arranged in the non-electrode heat generation area of the battery to perform heating.

Further, the first heat exchange assembly and the second heat exchange assembly are arranged on a same side of the battery, one heat exchange assembly is arranged in the electrode heat generation area of the battery, and another heat exchange assembly is arranged in the non-electrode heat generation area of the battery.

In this case, according to temperatures of various parts of the battery, at least one of the heat exchange assembly located in the electrode heat generation area of the battery and the heat exchange assembly located in the non-electrode heat generation area of the battery may be selectively started, to control temperatures of different areas on the same side of the battery, thereby improving the temperature uniformity of the battery, and improving the performance of the battery. For example, a temperature of the electrode heat generation area is much greater than a temperature of the non-electrode heat generation area, so that the heat exchange assembly corresponding to the electrode heat generation area can be started to cool the battery. Alternatively, while the heat exchange assembly corresponding to the electrode heat generation area is started to cool the battery, the heat exchange assembly corresponding to the non-electrode heat generation area is started to cool the battery. However, a quantity of working mediums of the heat exchange assembly corresponding to the electrode heat generation area is greater than a quantity of working mediums of the heat exchange assembly corresponding to the non-electrode heat generation area, so that the temperature uniformity of the battery can be improved.

With reference to FIG. 1, the following describes embodiments of the heat management system 100 working under different conditions.

Embodiment 1 is a condition that only a passenger compartment is cooled.

Under the condition that only the passenger compartment is cooled, a working medium flows in a working medium loop formed by a compressor 11, an in-vehicle condenser 120, an out-of-vehicle condenser 130, and an evaporator 140. In this case, a first on-off valve 51 blocks a second air exhaust channel 10d, a second on-off valve 52 blocks a first air exhaust channel 10c, a third on-off valve 53 conducts a third flow channel, a fourth on-off valve 54 blocks a bypass flow path 10f, a fifth on-off valve 55 conducts a pipeline, and a sixth on-off valve 56 blocks the pipeline. A first electronic expansion valve 61 and a second electronic expansion valve 62 block the pipeline. A third electronic expansion valve 63 conducts the pipeline, to play a throttling role. A fourth electronic expansion valve 64 blocks the pipeline.

A circulation path of the working medium is as follows: flowing out from the compressor 11, passing through a first pressure sensor 81, a first temperature sensor 82, the in-vehicle condenser 120, the third on-off valve 53, the fifth on-off valve 55, the out-of-vehicle condenser 130, a fourth one-way valve 44, the third electronic expansion valve 63, the evaporator 140, a third one-way valve 43, a fifth sensor 35, and a gas-liquid separator 15, and finally flowing back to the compressor 11.

A high-temperature and high-pressure gaseous working medium flows out from an air outlet of the compressor 11, and flows to the in-vehicle condenser 120 through the third flow channel. The in-vehicle condenser 120 serves only as a pipeline. The working medium continues to flow to the out-of-vehicle condenser 130, releases heat and liquefies at the out-of-vehicle condenser 130, then flows to the evaporator 140 after undergoing throttling and a pressure reduction performed by the third electronic expansion valve 63, absorbs heat and vaporizes at the evaporator 140, and finally becomes a low-temperature and low-pressure gaseous working medium that flows in from an air inlet of the compressor 11, thereby cooling the passenger compartment by the evaporator 140.

Embodiment 2 is a condition that only a battery is cooled and that a first heat exchange assembly 21 and a second heat exchange assembly 22 work separately. The first heat exchange assembly 21 works and the second heat exchange assembly 22 does not work.

Under the condition that only the battery is cooled, a working medium flows in a working medium loop formed by a compressor 11, an in-vehicle condenser 120, an out-of-vehicle condenser 130, and the first heat exchange assembly 21. In this case, a first on-off valve 51 blocks a second air exhaust channel 10d, a second on-off valve 52 conducts a first air exhaust channel 10c, a third on-off valve 53 conducts a third flow channel, a fourth on-off valve 54 blocks a bypass flow path 10f, a fifth on-off valve 55 conducts a pipeline, and a sixth on-off valve 56 blocks the pipeline. A first electronic expansion valve 61 conducts the pipeline, thereby playing a throttling role. A second electronic expansion valve 62 blocks the pipeline. A third electronic expansion valve 63 blocks the pipeline. A fourth electronic expansion valve 64 blocks the pipeline. A parallel switch valve 58 conducts the pipeline, and a switch valve 57 blocks a series branch 10g.

A circulation path of the working medium is as follows: flowing out from the compressor 11 to a first branch through a first pressure sensor 81, a first temperature sensor 82, the in-vehicle condenser 120, the third on-off valve 53, the fifth on-off valve 55, the out-of-vehicle condenser 130, a fourth one-way valve 44, and a second one-way valve 42, and the working medium that flows to the first branch finally flowing back to the compressor 11 through the first electronic expansion valve 61, a second sensor 32, the first heat exchange assembly 21, a first sensor 31, the parallel switch valve 58, the second on-off valve 52, a fifth one-way valve 45, and a gas-liquid separator 15.

A high-temperature and high-pressure gaseous working medium flows out from an air outlet of the compressor 11, and flows to the in-vehicle condenser 120 through the third flow channel. The in-vehicle condenser 120 serves only as a pipeline. The working medium continues to flow to the out-of-vehicle condenser 130, releases heat and liquefies at the out-of-vehicle condenser 130, then flows to the first heat exchange assembly 21 after undergoing throttling and a pressure reduction performed by the first electronic expansion valve 61, absorbs heat and vaporizes at the first heat exchange assembly 21, and becomes a low-temperature and low-pressure gaseous working medium that flows in from an air inlet of the compressor 11, thereby cooling the battery by a first heat exchange plate.

Embodiment 3 is a condition that only a battery is cooled and that a first heat exchange assembly 21 and a second heat exchange assembly 22 work in parallel.

Under the condition that only the battery is cooled, a working medium flows in a working medium loop formed by a compressor 11, an in-vehicle condenser 120, an out-of-vehicle condenser 130, and a battery heat exchange module. In this case, a first on-off valve 51 blocks a second air exhaust channel 10d, a second on-off valve 52 conducts a first air exhaust channel 10c, a third on-off valve 53 conducts a third flow channel, a fourth on-off valve 54 blocks a bypass flow path 10f, a fifth on-off valve 55 conducts a pipeline, and a sixth on-off valve 56 blocks the pipeline. A first electronic expansion valve 61 and a second electronic expansion valve 62 conduct the pipeline, thereby playing a throttling role. A third electronic expansion valve 63 blocks the pipeline. A fourth electronic expansion valve 64 blocks the pipeline. A parallel switch valve 58 conducts the pipeline, and a switch valve 57 blocks a series branch 10g.

A circulation path of the working medium is as follows: flowing out from the compressor 11 to a first branch and a second branch through a first pressure sensor 81, a first temperature sensor 82, the in-vehicle condenser 120, the third on-off valve 53, the fifth on-off valve 55, the out-of-vehicle condenser 130, a fourth one-way valve 44, and a second one-way valve 42, the working medium that flows to the first branch flowing through the first electronic expansion valve 61, a second sensor 32, the first heat exchange assembly 21, a first sensor 31, and the parallel switch valve 58, and the working medium that flows to the second branch flowing out of the second branch after flowing through the second electronic expansion valve 62, a fourth sensor 34, the second heat exchange assembly 22, and a third sensor 33, and after being mixed with the working medium flowing out of the first branch, passing through the second on-off valve 52, a fifth one-way valve 45, and a gas-liquid separator 15, and finally flowing back to the compressor 11.

A high-temperature and high-pressure gaseous working medium flows out from an air outlet of the compressor 11, and flows to the in-vehicle condenser 120 through the third flow channel. The in-vehicle condenser 120 serves only as a pipeline. The working medium continues to flow to the out-of-vehicle condenser 130, releases heat and liquefies at the out-of-vehicle condenser 130, then flows to the first heat exchange assembly 21 and the second heat exchange assembly 22 after undergoing throttling and a pressure reduction performed by the first electronic expansion valve 61 and the second electronic expansion valve 62, absorbs heat and vaporizes separately at the first heat exchange assembly 21 and the second heat exchange assembly 22, and becomes a low-temperature and low-pressure gaseous working medium that flows in from an air inlet of the compressor 11, thereby cooling the battery by a first heat exchange plate and a second heat exchange plate.

Embodiment 4 is a condition that only a battery is cooled and that a first heat exchange assembly 21 and a second heat exchange assembly 22 work in series.

Under the condition that only the battery is cooled, a working medium flows in a working medium loop formed by a compressor 11, an in-vehicle condenser 120, an out-of-vehicle condenser 130, and a battery heat exchange module. In this case, a first on-off valve 51 blocks a second air exhaust channel 10d, a second on-off valve 52 conducts a first air exhaust channel 10c, a third on-off valve 53 conducts a third flow channel, a fourth on-off valve 54 blocks a bypass flow path 10f, a fifth on-off valve 55 conducts a pipeline, and a sixth on-off valve 56 blocks the pipeline. A first electronic expansion valve 61 and a second electronic expansion valve 62 conduct the pipeline, thereby playing a throttling role. A third electronic expansion valve 63 blocks the pipeline. A fourth electronic expansion valve 64 blocks the pipeline. A parallel switch valve 58 blocks the pipeline, and a switch valve 57 conducts a series branch 10g.

A circulation path of the working medium is as follows: flowing out from the compressor 11, flowing through a first pressure sensor 81, a first temperature sensor 82, the in-vehicle condenser 120, the third on-off valve 53, the fifth on-off valve 55, the out-of-vehicle condenser 130, a fourth one-way valve 44, a second one-way valve 42, the first electronic expansion valve 61, a second sensor 32, the first heat exchange assembly 21, a first sensor 31, the switch valve 57, a fourth sensor 34, the second heat exchange assembly 22, a third sensor 33, the second on-off valve 52, a fifth one-way valve 45, and a gas-liquid separator 15, and finally flowing back to the compressor 11.

A high-temperature and high-pressure gaseous working medium flows out from an air outlet of the compressor 11, and flows to the in-vehicle condenser 120 through the third flow channel. The in-vehicle condenser 120 serves only as a pipeline. The working medium continues to flow to the out-of-vehicle condenser 130, releases heat and liquefies at the out-of-vehicle condenser 130, then flows to the first heat exchange assembly 21 and the second heat exchange assembly 22 after undergoing throttling and a pressure reduction performed by the first electronic expansion valve 61, absorbs heat and vaporizes at the first heat exchange assembly 21 and the second heat exchange assembly 22, and becomes a low-temperature and low-pressure gaseous working medium that flows in from an air inlet of the compressor 11, thereby cooling the battery by a first heat exchange plate and a second heat exchange plate.

Embodiment 5 is a condition that a passenger compartment and that a battery are cooled. Actually, Embodiment 5 is a simultaneous operation of Embodiment 1 and any one of Embodiment 2 to Embodiment 4.

Embodiment 6 is a condition that only a passenger compartment is heated. In addition, the external environment has a relatively high temperature, and an out-of-vehicle condenser 130 may absorb heat from the external environment.

Under the condition that only the passenger compartment is heated, a working medium flows in a working medium loop formed by a compressor 11, an in-vehicle condenser 120, and an out-of-vehicle condenser 130. In this case, a first on-off valve 51 blocks a second air exhaust channel 10d, a second on-off valve 52 blocks a first air exhaust channel 10c, a third on-off valve 53 blocks a third flow channel, a fourth on-off valve 54 conducts a bypass flow path 10f, a fifth on-off valve 55 conducts a pipeline, and a sixth on-off valve 56 blocks the pipeline. A first electronic expansion valve 61 and a second electronic expansion valve 62 block the pipeline. A third electronic expansion valve 63 blocks the pipeline. A fourth electronic expansion valve 64 conducts the pipeline, thereby playing a throttling role.

A circulation path of the working medium is as follows: flowing out from the compressor 11, flowing through a first pressure sensor 81, a first temperature sensor 82, the in-vehicle condenser 120, the fourth electronic expansion valve 64, the fifth on-off valve 55, the out-of-vehicle condenser 130, a fourth one-way valve 44, the fourth on-off valve 54, a fifth sensor 35, and a gas-liquid separator 15, and finally flowing back to the compressor 11.

A high-temperature and high-pressure gaseous working medium flows out from an air outlet of the compressor 11, and flows to the in-vehicle condenser 120 through the third air exhaust channel 10e. The working medium releases heat and liquefies at the in-vehicle condenser 120, then flows to the out-of-vehicle condenser 130 after undergoing throttling and a pressure reduction performed by the fourth electronic expansion valve 64, exchanges heat with the external environment at the out-of-vehicle condenser 130, absorbs heat and vaporizes, and finally becomes a low-temperature and low-pressure gaseous working medium that flows in from an air inlet of the compressor 11 along the bypass flow path 10f, thereby heating the passenger compartment by the in-vehicle condenser 120.

Embodiment 7 is a condition that only a passenger compartment is heated. In addition, an external environment has a relatively low temperature, and the out-of-vehicle condenser 130 cannot absorb heat from the external environment.

Under the condition that only the passenger compartment is heated, a working medium flows in a working medium loop formed by a compressor 11 and an in-vehicle condenser 120. In this case, a first on-off valve 51 blocks a second air exhaust channel 10d, a second on-off valve 52 blocks a first air exhaust channel 10c, a third on-off valve 53 blocks a third flow channel, a fourth on-off valve 54 conducts a bypass flow path 10f, a fifth on-off valve 55 blocks a pipeline, and a sixth on-off valve 56 conducts the pipeline. A first electronic expansion valve 61 and a second electronic expansion valve 62 block the pipeline. A third electronic expansion valve 63 blocks the pipeline. A fourth electronic expansion valve 64 conducts the pipeline, thereby playing a throttling role.

A circulation path of the working medium is as follows: flowing out from the compressor 11, flowing through a first pressure sensor 81, a first temperature sensor 82, the in-vehicle condenser 120, the fourth electronic expansion valve 64, the sixth on-off valve 56, the fourth on-off valve 54, a fifth sensor 35, and a gas-liquid separator 15, and finally flowing back to the compressor 11.

A high-temperature and high-pressure gaseous working medium flows out from an air outlet of the compressor 11, and flows to the in-vehicle condenser 120 through the third air exhaust channel 10e. The working medium releases heat and liquefies at the in-vehicle condenser 120, then flows to the bypass flow path 10f after undergoing throttling and a pressure reduction performed by the fourth electronic expansion valve 64, and flows in from an air inlet of the compressor 11, thereby heating the passenger compartment by the in-vehicle condenser 120.

Embodiment 8 is a condition that only a battery is heated when an ambient temperature is relatively high, and that a first heat exchange assembly 21 and a second heat exchange assembly 22 work separately. The first heat exchange assembly 21 works and the second heat exchange assembly 22 does not work.

Under the condition of only a battery heating module, a working medium flows in a working medium loop formed by a compressor 11, the first heat exchange assembly 21, and an evaporator 140. In this case, a first on-off valve 51 conducts a second air exhaust channel 10d, a second on-off valve 52 blocks a first air exhaust channel 10c, a third on-off valve 53 blocks a third flow channel, a fourth on-off valve 54 blocks a bypass flow path 10f, a fifth on-off valve 55 blocks a pipeline, and a sixth on-off valve 56 conducts the pipeline. A first electronic expansion valve 61 conducts the pipeline, thereby playing a throttling role. A second electronic expansion valve 62 blocks the pipeline. A third electronic expansion valve 63 conducts the pipeline, thereby playing a throttling role. A fourth electronic expansion valve 64 performs blockage. A parallel switch valve 58 conducts the pipeline, and a switch valve 57 blocks a series branch 10g.

A circulation path of the working medium is as follows: flowing out from the compressor 11, flowing to a first branch through a first pressure sensor 81, a first temperature sensor 82, and the first on-off valve 51, a working medium that flows to the first branch flowing out of the first branch through a first sensor 31, the first heat exchange assembly 21, a second sensor 32, and the first electronic expansion valve 61, flowing through a first one-way valve 41, the sixth on-off valve 56, the third electronic expansion valve 63, the evaporator 140, a third one-way valve 43, a fifth sensor 35, and a gas-liquid separator 15, and finally flowing back to the compressor 11.

A high-temperature and high-pressure gaseous working medium flows out from an air outlet of the compressor 11, and flows to a battery heat exchange module through the second air exhaust channel 10d. The working medium releases heat and liquefies at the first heat exchange assembly 21, flows to the evaporator 140 after throttling and a pressure reduction performed by the first electronic expansion valve 61 and the third electronic expansion valve 63, absorbs heat and vaporizes at the evaporator 140, and finally becomes a low-temperature and low-pressure gaseous working medium that flows in from an air inlet of the compressor 11, thereby heating the battery by a first heat exchange plate and a second heat exchange plate.

Embodiment 9 is a condition that only a battery is heated when an ambient temperature is relatively high, and that a first heat exchange assembly 21 and a second heat exchange assembly 22 work in parallel.

Under the condition of only a battery heating module, a working medium flows in a working medium loop formed by a compressor 11, a battery heat exchange module, and an evaporator 140. In this case, a first on-off valve 51 conducts a second air exhaust channel 10d, a second on-off valve 52 blocks a first air exhaust channel 10c, a third on-off valve 53 blocks a third flow channel, a fourth on-off valve 54 blocks a bypass flow path 10f, a fifth on-off valve 55 blocks a pipeline, and a sixth on-off valve 56 conducts the pipeline. A first electronic expansion valve 61 and a second electronic expansion valve 62 conduct the pipeline, thereby playing a throttling role. A third electronic expansion valve 63 conducts the pipeline, thereby playing a throttling role. A fourth electronic expansion valve 64 performs blockage. A parallel switch valve 58 conducts the pipeline, and a switch valve 57 blocks a series branch 10g.

A circulation path of the working medium is as follows: flowing out from the compressor 11, flowing to a first branch and a second branch through a first pressure sensor 81, a first temperature sensor 82, and a first on-off valve 51, a working medium that flows to the first branch flowing out of the first branch through a first sensor 31, the first heat exchange assembly 21, a second sensor 32, and the first electronic expansion valve 61, and a working medium that flows to the second branch flowing out of the second branch through the parallel switch valve 58, a third sensor 33, the second heat exchange assembly 22, a fourth sensor 34, and the second electronic expansion valve 62, after being mixed with the working medium flowing out of the first branch, flowing through a first one-way valve 41, the sixth on-off valve 56, the third electronic expansion valve 63, the evaporator 140, a third one-way valve 43, a fifth sensor 35, and a gas-liquid separator 15, and finally flowing back to the compressor 11.

A high-temperature and high-pressure gaseous working medium flows out from an air outlet of the compressor 11, and flows to the battery heat exchange module through the second air exhaust channel 10d. The working medium releases heat and liquefies at the first heat exchange assembly 21 and the second heat exchange assembly 22 separately, then flows to the evaporator 140 after throttling and a pressure reduction performed by the first electronic expansion valve 61, the second electronic expansion valve 62, and the third electronic expansion valve 63, absorbs heat and vaporizes at the evaporator 140, and finally becomes a low-temperature and low-pressure gaseous working medium that flows in from an air inlet of the compressor 11, thereby heating the battery by a first heat exchange plate and a second heat exchange plate.

Embodiment 10 is a condition that only a battery is heated when an ambient temperature is relatively high, and that a first heat exchange assembly 21 and a second heat exchange assembly 22 work in series.

Under the condition of only a battery heating module, a working medium flows in a working medium loop formed by a compressor 11, a battery heat exchange module, and an evaporator 140. In this case, a first on-off valve 51 conducts a second air exhaust channel 10d, a second on-off valve 52 blocks a first air exhaust channel 10c, a third on-off valve 53 blocks a third flow channel, a fourth on-off valve 54 blocks a bypass flow path 10f, a fifth on-off valve 55 blocks a pipeline, and a sixth on-off valve 56 conducts the pipeline. A first electronic expansion valve 61 and a second electronic expansion valve 62 conduct the pipeline, thereby playing a throttling role. A third electronic expansion valve 63 conducts the pipeline, thereby playing a throttling role. A fourth electronic expansion valve 64 performs blockage. A parallel switch valve 58 blocks the pipeline, and a switch valve 57 conducts a series branch 10g.

A circulation path of the working medium is as follows: flowing out from the compressor 11, flowing through a first pressure sensor 81, a first temperature sensor 82, the first on-off valve 51, the parallel switch valve 58, a third sensor 33, the second heat exchange assembly 22, a fourth sensor 34, a first sensor 31, the first heat exchange assembly 21, a second sensor 32, the first electronic expansion valve 61, a first one-way valve 41, the sixth on-off valve 56, the third electronic expansion valve 63, the evaporator 140, a third one-way valve 43, a fifth sensor 35, and a gas-liquid separator 15, and finally flowing back to the compressor 11.

A high-temperature and high-pressure gaseous working medium flows out from an air outlet of the compressor 11, and flows to the battery heat exchange module through the second air exhaust channel 10d, releases heat and liquefies at the first heat exchange assembly 21 and the second heat exchange assembly 22, then flows to the evaporator 140 after throttling and a pressure reduction performed by the first electronic expansion valve 61 and the third electronic expansion valve 63, absorbs heat and vaporizes at the evaporator 140, and finally becomes a low-temperature and low-pressure gaseous working medium that flows in from an air inlet of the compressor 11, thereby heating the battery by a first heat exchange plate and a second heat exchange plate.

Embodiment 11 is a condition that only a battery is heated when an ambient temperature is relatively low, and that a first heat exchange assembly 21 and a second heat exchange assembly 22 work in parallel.

Under the condition of only a battery heating module, a working medium flows in a working medium loop formed by a compressor 11, a battery heat exchange module, and an evaporator 140. In this case, a first on-off valve 51 conducts a second air exhaust channel 10d, a second on-off valve 52 blocks a first air exhaust channel 10c, a third on-off valve 53 blocks a third flow channel, a fourth on-off valve 54 conducts a bypass flow path 10f, a fifth on-off valve 55 blocks a pipeline, and a sixth on-off valve 56 conducts the pipeline. A first electronic expansion valve 61 and a second electronic expansion valve 62 conduct the pipeline, thereby playing a throttling role. A third electronic expansion valve 63 blocks the pipeline. A fourth electronic expansion valve 64 performs blockage. A parallel switch valve 58 conducts the pipeline, and a switch valve 57 blocks a series branch 10g.

A circulation path of the working medium is as follows: flowing out from the compressor 11, flowing to a first branch and a second branch through a first pressure sensor 81, a first temperature sensor 82, and the first on-off valve 51, a working medium that flows to the first branch flowing out of the first branch through a first sensor 31, the first heat exchange assembly 21, a second sensor 32, and the first electronic expansion valve 61, and a working medium that flows to the second branch flowing out of the second branch through the parallel switch valve 58, a third sensor 33, the second heat exchange assembly 22, a fourth sensor 34, and the second electronic expansion valve 62, after being mixed with the working medium flowing out of the first branch, flowing through a first one-way valve 41, the sixth on-off valve 56, the fourth on-off valve 54, a fifth sensor 35, and a gas-liquid separator 15, and finally flowing back to the compressor 11.

A high-temperature and high-pressure gaseous working medium flows out from an air outlet of the compressor 11, and flows to the battery heat exchange module through the second air exhaust channel 10d. The working medium releases heat and liquefies at the first heat exchange assembly 21 and the second heat exchange assembly 22 separately, and then flows to the compressor 11 after throttling and a pressure reduction performed by the first electronic expansion valve 61, the second electronic expansion valve 62, and the third electronic expansion valve 63. However, an ambient temperature is relatively low. The working medium naturally exchanges heat in a flowing process, and finally becomes a low-temperature and low-pressure gaseous working medium that flows in from an air inlet of the compressor 11, thereby heating the battery by a first heat exchange plate and a second heat exchange plate.

Embodiment 12 is a condition that an ambient temperature is relatively high and that both a passenger compartment and a battery pack are heated. Embodiment 12 is actually a simultaneous operation of Embodiment 6 and any one of Embodiment 8 to Embodiment 10.

The above several embodiments are merely for the convenience of describing the present disclosure and simplifying the descriptions, do not indicate or imply that the heat management system 100 can run based only on a situation shown in an embodiment under a condition, and therefore cannot be understood as a limitation on the present disclosure.

In some embodiments of the present disclosure, the heat management system further includes a dynamic heat management subsystem 200, and the dynamic heat management subsystem 200 includes a fourth heat exchanger 71 and a coolant circulation system. The fourth heat exchanger 71 includes a first flow channel and a second flow channel. The first flow channel is connected to the coolant circulation system, and one end of the second flow channel is connected to at least one of a first trunk line 10a and a second trunk line 10b.

The heat management system 100 further includes an air conditioning circulation loop 101 that further includes a heating branch. One of the first trunk line 10a and the second trunk line 10b is connected to the second flow channel. The other of the first trunk line 10a and the second trunk line 10b is connected to the heating branch in parallel. A controller is configured to control at least one of the heating branch, the first trunk line 10a, and the second trunk line 10b to exchange heat.

A coolant flows in the first flow channel, a working medium flows in the second flow channel, the first flow channel and the second flow channel are located in the fourth heat exchanger 71 together, and the first flow channel and the second flow channel may exchange heat with each other. When a temperature of a coolant flowing in the second flow channel is greater than a working medium flowing in the first flow channel, the working medium absorbs heat when flowing through the fourth heat exchanger 71. When the temperature of the coolant flowing in the second flow channel is less than that of the working medium flowing in the first flow channel, the working medium releases heat when flowing through the fourth heat exchanger 71.

The coolant circulation system may exchange, with the working medium, heat generated by the dynamic heat management subsystem 200, thereby heating or cooling the working medium by using the heat generated by the dynamic heat management subsystem 200, and assisting the battery heat exchange module in exchanging heat with the battery.

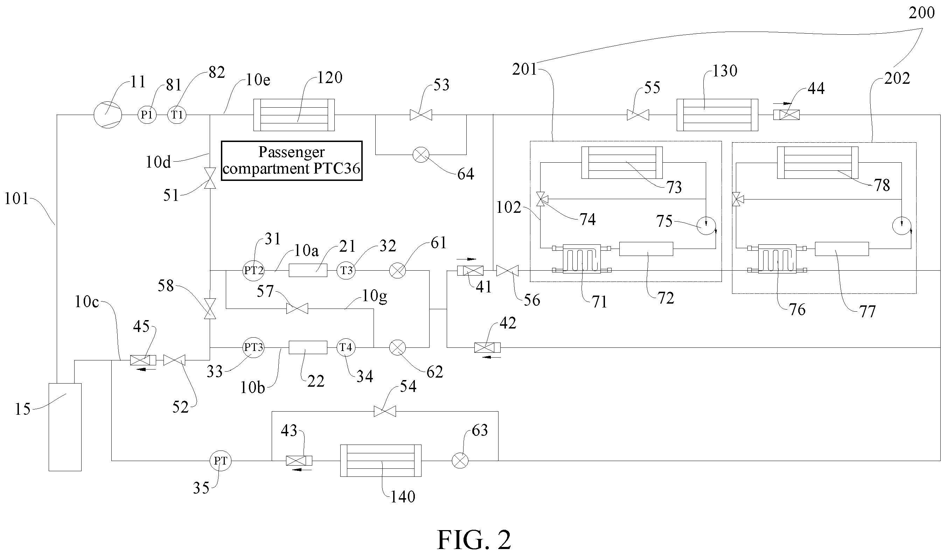

In some embodiments of the present disclosure, as shown in FIG. 2, the dynamic heat management subsystem 200 includes at least one of a high-pressure heat management subsystem 201 and an engine heat management subsystem 202.

The high-pressure heat management subsystem 201 may exchange heat with the air conditioning circulation loop 101, the engine heat management subsystem 202 may exchange heat with the air conditioning circulation loop 101, or both the high-pressure heat management subsystem 201 and the engine heat management subsystem 202 may exchange heat with the air conditioning circulation loop 101.

In some specific embodiments of the present disclosure, the heat management system further includes a high-pressure heat management subsystem 201, and the high-pressure heat management subsystem 201 includes a fourth heat exchanger 71 and a coolant circulation system. The heat exchanger 71 includes a first flow channel and a second flow channel. The first flow channel is connected to the coolant circulation system. One end of the second flow channel is in selective communication with a second end and a first heat exchanger 12, and the other end of the second flow channel is connected to the fourth heat exchanger 71.

In some embodiments of the present disclosure, the high-pressure heat management subsystem 201 further includes: a charging and distribution/motor assembly 72 and a first radiator 73. The charging and distribution/motor assembly 72 exchanges heat with the motor and electric control of a vehicle. The charging and distribution/motor assembly 72 is connected between the coolant circulation system and the first radiator 73. The first radiator 73 is suitable for exchanging heat with an external environment.

In some embodiments of the present disclosure, the high-pressure heat management subsystem 201 further includes: a switching valve group 74. The switching valve group 74 is separately connected to the two ends of a circulation loop, the charging and distribution/motor assembly 72, and the first radiator 73. The switching valve group 74 is operated to switch the high-pressure heat management subsystem 201 between different conditions. Specifically, the switching valve group 74 is a three-way valve.

The switching valve group 74 may control a direction of a coolant, and may heat a working medium with heat generated by the motor and the electric control of the vehicle, or may dissipate heat generated by the motor and the electric control of the vehicle to the outside of the vehicle through the first radiator 73.

In some embodiments of the present disclosure, the high-pressure heat management system 100 further includes a water pump 75. The water pump 75 is arranged between the charging and distribution/motor assembly 72 and the fourth heat exchanger 71. The water pump 75 is constructed such that the coolant is pumped from the charging and distribution/motor assembly 72 to the fourth heat exchanger 71.

The high-pressure heat management subsystem 201 has a first condition. Under the first condition, the charging and distribution/motor assembly 72 and the second flow channel form a first loop. A coolant flowing out of the charging and distribution/motor assembly 72 flows to the fourth heat exchanger 71 under an action of the water pump 75. After exchanging, on the second flow channel of the fourth heat exchanger 71, heat with the working medium on the first flow channel, the coolant flows back to the charging and distribution/motor assembly 72 to exchange heat with the motor and the electric control of the vehicle.

When the working medium has a heat absorption requirement during circulation and backflow and the high-pressure heat management subsystem 201 has no heat dissipation requirement, the high-pressure heat management subsystem 201 may run based on the first condition. A high-temperature coolant flowing out of the charging and distribution/motor assembly 72 flows into the second flow channel, exchanges heat with a low-temperature working medium flowing through the first flow channel, and transfers the heat generated by the motor and the electric control of the vehicle to the working medium for circulation and backflow. The heat generated by the motor and the electric control of the vehicle is effectively used, thereby improving a heating capability of the heat management system 100 and reducing energy consumption of the heat management system 100.

The high-pressure heat management subsystem 201 further has a second condition. Under the second condition, the charging and distribution/motor assembly 72, the first radiator 73, and the second flow channel form a second loop. A coolant flowing out of the charging and distribution/motor assembly 72 flows to the fourth heat exchanger 71 under an action of the water pump 75. After exchanging, on the second flow channel of the fourth heat exchanger 71, heat with the working medium on the first flow channel, the coolant flows to the first radiator 73. After exchanging heat at the first radiator 73, the coolant flows back to the charging and distribution/motor assembly 72 to exchange heat with the motor and the electric control of the vehicle.

When the working medium has a heat absorption requirement during circulation and backflow, the high-pressure heat management subsystem 201 has a heat dissipation requirement, and the heat dissipation requirement of the high-pressure heat management subsystem 201 is higher than the heat absorption requirement of the working medium during circulation and backflow, the high-pressure heat management subsystem 201 may run based on the second condition. The high-temperature coolant flowing out of the charging and distribution/motor assembly 72 flows into the second flow channel, exchanges heat with a low-temperature working medium flowing through the first flow channel, and transfers the heat generated by the motor and the electric control of the vehicle to the working medium for circulation and backflow. However, a temperature of the coolant is still relatively high after a heat exchange is performed once. Therefore, the coolant flows to the first radiator 73 to exchange heat with the external environment for a second time, to dissipate heat. The heat generated by the motor and the electric control of the vehicle is effectively used, thereby improving a heating capability of the heat management system 100 and reducing energy consumption of the heat management system 100.

In addition, when the working medium has a heat absorption requirement during circulation and backflow, heat generated by the high-pressure heat management subsystem 201 is insufficient, and the temperature of the coolant is less than that of the external environment, the high-pressure heat management subsystem 201 may alternatively run based on the second condition. The coolant exchanges heat with the external environment at the first radiator 73, to increase the temperature of the coolant. The coolant then flows through a circulation loop to the charging and distribution/motor assembly 72 and the fourth heat exchanger 71, and exchanges heat with the low-temperature working medium flowing through the first flow channel, thereby transferring heat of the external environment to the working medium for circulation and backflow and the high-pressure heat management subsystem 201. The heat may be effectively used, thereby improving a heating capability of the heat management system 100 and reducing energy consumption of the heat management system 100.

The high-pressure heat management subsystem 201 further includes a mixed condition. Under the mixed condition, circulation is performed in both the first loop and the second loop. A coolant flowing out of the charging and distribution/motor assembly 72 flows to a third heat exchanger 14 under an action of the water pump 75. After the coolant exchanges, on a second flow channel of the third heat exchanger 14, heat with the working medium on the first flow channel, one part directly flows back to the charging and distribution/motor assembly 72 to exchange heat with the motor and the electric control of the vehicle, and the other part flows the first radiator 73. After exchanging heat at the first radiator 73, the coolant flows back to the charging and distribution/motor assembly 72 to exchange heat with the motor and the electric control of the vehicle.

When the working medium has a heat absorption requirement during circulation and backflow, the high-pressure heat management subsystem 201 has a heat dissipation requirement, and the heat absorption requirement of the working medium during circulation and backflow is higher than the heat dissipation requirement of the high-pressure heat management subsystem 201, the high-pressure heat management subsystem 201 may run based on the mixed condition.

The high-temperature coolant flowing out of the charging and distribution/motor assembly 72 flows into the second flow channel, exchanges heat with the low-temperature working medium flowing through the first flow channel, and transfers the heat generated by the motor and the electric control of the vehicle to the working medium for circulation and backflow. One part of a coolant performing a heat exchange flows back to the charging and distribution/motor assembly 72, and the other part of the coolant flows the radiator 73 to exchange heat with the external environment for a second time, to dissipate heat. The heat generated by the motor and the electric control of the vehicle is effectively used, thereby improving a heating capability of the heat management system 100 and reducing energy consumption of the heat management system 100.

For example, the high-pressure heat management subsystem 201 has the first condition, the second condition, and the mixed condition. A coolant during circulation and backflow under each of the first condition, the second condition, and the mixed condition heats the working medium during circulation and backflow. Therefore, the heat management system 100 works under different conditions, and may further cooperate with the different conditions of the high-pressure heat management subsystem 201 to work.

For example, when only the condition that the passenger compartment is heated is used, the condition may mutually cooperate with the first condition, the second condition, and the mixed condition of the high-pressure heat management subsystem 201.

In some embodiments of the present disclosure, the heat management system further includes an engine heat management subsystem 202, and the engine heat management subsystem 202 includes a fifth heat exchanger 76 and a coolant circulation system. The fifth heat exchanger 76 includes a third flow channel and a fourth flow channel. The third flow channel is connected to the coolant circulation system. One end of the fourth flow channel is in selective communication with a second end b and the first heat exchanger 12, and the other end of the fourth flow channel is connected to the third heat exchanger 14.

In some embodiments of the present disclosure, the engine heat management subsystem 202 further includes: a motor assembly 77 and a second radiator 78. The motor assembly 77 exchanges heat with the motor of the vehicle. The motor assembly 77 is connected between the coolant circulation system and a second radiator 78. The second radiator 78 is suitable for exchanging heat with the external environment.

A vehicle 1000 according to an embodiment of the present disclosure includes the heat management system 100 according to any one of the above embodiments.

For the vehicle 1000 according to this embodiment of the present disclosure, the heat management system 100 is arranged, so that a quantity of times of maintenance and battery replacements can be reduced, charging efficiency and use convenience of the vehicle are improved, and a proper layout of the vehicle is facilitated.

In the descriptions of this specification, descriptions using reference terms "an embodiment", "some embodiments", "an exemplary embodiment", "an example", "a specific example", or "some examples" mean that specific characteristics, structures, materials, or features described with reference to the embodiment or example are included in at least one embodiment or example of this application. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations may be made to the embodiments without departing from the principles and spirit of the present disclosure, and the scope of the present disclosure is as defined by the appended claims and their equivalents.

## Claims

1. A heat management system, comprising:
a battery heat exchange module, the battery heat exchange module comprising: a first trunk line, a first heat exchange assembly being arranged in the first trunk line; a second trunk line, a second heat exchange assembly being arranged in the second trunk line, and the first heat exchange assembly and the second heat exchange assembly being configured to exchange heat with a battery; and
a controller, configured to control, according to a temperature of the battery, at least one of the first trunk line and the second trunk line to exchange heat with the battery.

2. The heat management system according to claim 1, further comprising an air conditioning circulation loop, the air conditioning circulation loop comprising a heating branch, the first trunk being connected to the heating branch in parallel, the second trunk line being connected to the heating branch in parallel, and the controller being configured to control at least one of the heating branch, the first trunk line, and the second trunk line to exchange heat.

3. The heat management system according to claim 1, the heat management system further comprising an air conditioning circulation loop, the air conditioning circulation loop comprising a cooling branch and a heating branch, the first trunk line being connected to the cooling branch in parallel, the second trunk line being connected to the cooling branch in parallel, the first trunk line being connected to the heating branch in parallel, and the second trunk line being connected to the heating branch in parallel; and
the controller being configured to control at least one of the heating branch, the cooling branch, the first trunk line, and the second trunk line to exchange heat.

4. The heat management system according to claim 2, further comprising a storage device, the storage device being connected between an air outlet of a compressor and an air inlet of the compressor in the heat management system.

5. The heat management system according to claim 4, wherein the controller controls, according to the temperature of the battery, the storage device to supply a working medium to the first trunk line or/and the second trunk line; or
the controller controls, according to the temperature of the battery, the storage device to supply a working medium to the air conditioning circulation loop.

6. The heat management system according to claim 2, wherein the air conditioning circulation loop comprises: a compressor, a first heat exchanger, and a second heat exchanger, wherein the compressor comprises an air inlet and an air outlet, and the air outlet of the compressor, the first heat exchanger, the second heat exchanger, and the air inlet of the compressor are connected in sequence; and
the heating branch comprises the first heat exchanger, the first trunk line is connected to the first heat exchanger in parallel, the second trunk line is connected to the first heat exchanger in parallel, and the controller is configured to control the air outlet of the compressor to be in communication with at least one of the first heat exchanger, the first trunk line, and the second trunk line, to implement that at least one of the first heat exchanger, the first trunk line, and the second trunk line exchanges heat.

7. The heat management system according to claim 3, wherein the air conditioning circulation loop comprises: a compressor, a first heat exchanger, a second heat exchanger, and a third heat exchanger, wherein the compressor comprises an air inlet and an air outlet, and the air outlet of the compressor, the first heat exchanger, the second heat exchanger, the third heat exchanger, and the air inlet of the compressor are connected in sequence;
the heating branch comprises the first heat exchanger, the cooling branch includes the third heat exchanger, the first trunk line is connected to the first heat exchanger in parallel, the second trunk line is connected to the first heat exchanger in parallel, the first trunk line is connected to the third heat exchanger in parallel, and the second trunk line is connected to the third heat exchanger in parallel; and
the controller is configured to:
control the air outlet of the compressor to be in communication with at least one of the first heat exchanger, the first trunk line, and the second trunk line, to implement that at least one of the first heat exchanger, the first trunk line, and the second trunk line exchanges heat; and
control the second heat exchanger to be in communication with at least one of the first trunk line, the second trunk line, and the third heat exchanger, to implement that at least one of the first trunk line, the second trunk line, and the third heat exchanger exchanges heat.

8. The heat management system according to claim 7, the heat management system further comprising a first switch valve and a second switch valve, the first switch valve being connected between a second end of the battery heat exchange module and the third heat exchanger in series, and the second switch valve being connected between the second end of the battery heat exchange module and the second heat exchanger in series.

9. The heat management system according to any one of claims 2 to 8, wherein a first sensor and a second sensor are arranged in the first trunk line, the first sensor is located at a first end of the first heat exchange assembly, and the second sensor is located at a second end of the first heat exchange assembly; and
a third sensor and a fourth sensor are further arranged in the second trunk line, the third sensor is located at a first end of the second heat exchange assembly, and the fourth sensor is located at a second end of the second heat exchange assembly.

10. The heat management system according to any one of claims 3 to 9, wherein the first sensor, the second sensor, and a first flow rate regulating element are arranged in the first trunk line, the first sensor is located at the first end of the first heat exchange assembly, the first flow rate regulating element is located at the second end of the first heat exchange assembly, and the second sensor is arranged between the second end of the first heat exchange assembly and the first flow rate regulating element; and
the third sensor, the fourth sensor, and a second flow rate regulating element are further arranged in the second trunk line, the third sensor is located at the first end of the second heat exchange assembly, the second flow rate regulating element is located at the second end of the second heat exchange assembly, and the fourth sensor is arranged between the second end of the second heat exchange assembly and the second flow rate regulating element.

11. The heat management system according to any one of claims 1 to 10, the heat management system further comprising a third switch valve and a fourth switch valve, the third switch valve being arranged in the first trunk line, and the fourth switch valve being arranged in the second trunk line.

12. The heat management system according to claim 1, the heat management system comprising an air conditioning circulation loop, the air conditioning circulation loop comprising a cooling branch, the first trunk line being connected to the cooling branch in parallel, and the second trunk line being connected to the cooling branch in parallel; and
the controller being configured to control at least one of the cooling branch, the first trunk line, and the second trunk line to exchange heat.

13. The heat management system according to any one of claims 1 to 10, further comprising a series branch, one end of the series branch being connected to the first trunk line, the other end of the series branch being connected to the second trunk line, and the controller being further configured to control, according to the temperature of the battery, the series branch to implement a series connection between the first trunk line and the second trunk line.

14. The heat management system according to claim 13, wherein a first interface of the first heat exchange assembly is connected to a second interface of the second heat exchange assembly through the series branch.

15. The heat management system according to claim 14, wherein the series branch comprises a switch valve, and the first interface of the first heat exchange assembly is connected to the second interface of the second heat exchange assembly through the switch valve.

16. The heat management system according to claim 15, wherein the first sensor is arranged between one end of the series branch and the first interface of the first heat exchange assembly; and
the third sensor is arranged between the other end of the series branch and the second interface of the second heat exchange assembly.

17. The heat management system according to any one of claims 1 to 16, wherein the first heat exchange assembly is arranged on one side of the battery, and the second heat exchange assembly is arranged on the other side of the battery.

18. The heat management system according to claim 17, wherein at least one of the first heat exchange assembly and the second heat exchange assembly comprises a plurality of heat exchange assemblies, and the plurality of heat exchange assemblies are connected in parallel.

19. The heat management system according to any one of claims 1 to 17, wherein one of the heat exchange assemblies is arranged in an electrode heat generation area of the battery, and one of the heat exchange assemblies is arranged in a non-electrode heat generation area of the battery.

20. A vehicle, comprising the heat management system according to any one of claims 1 to 19.
